Europäisches Patentamt

**(19)** European Patent Office

Office européen des brevets

**(11)** Publication number : **0 331 329 B1**

**(12)** # EUROPEAN PATENT SPECIFICATION

**(45)** Date of publication of patent specification :
**14.09.94 Bulletin 94/37**

**(51)** Int. Cl.[5] : **G03G 15/00,** G06F 3/02

**(21)** Application number : **89301692.3**

**(22)** Date of filing : **22.02.89**

**(54) Touch dialogue user interface for reproduction machines.**

**(30)** Priority : **04.03.88 US 164365**

**(43)** Date of publication of application :
**06.09.89 Bulletin 89/36**

**(45)** Publication of the grant of the patent :
**14.09.94 Bulletin 94/37**

**(84)** Designated Contracting States :
**DE GB IT**

**(56)** References cited :
**DE-A- 3 528 349**
**US-A- 4 567 470**
**US-A- 4 597 662**
**US-A- 4 649 499**
**XEROX DISCLOSURE JOURNAL, vol. 9, no. 4,**
**July/August 1984, Stamford (Conn.) ; James D.**
**RICHAR : "Direct-select vacuum fluorescent**
**for copier application", page 269.**

**(73)** Proprietor : **XEROX CORPORATION**
**Xerox Square - 020**
**Rochester New York 14644 (US)**

**(72)** Inventor : **Herceg, Thomas Jay**
**473 East Street**
**Pittsford New York 14534 (US)**
Inventor : **Perey, Alan Joseph**
**75 Merchants Road**
**Rochester New York 14609 (US)**
Inventor : **Williams, James Benjamin, Jr.**
**290 Randolph Street**
**Rochester New York 14609 (US)**
Inventor : **Williamson, Nancy B.**
**553 University Avenue**
**Rochester New York 14607 (US)**

**(74)** Representative : **Goode, Ian Roy et al**
**Rank Xerox Patent Department**
**Albion House**
**55 New Oxford Street**
**London WC1A 1BS (GB)**

## Description

The invention relates to a system for programming reproduction machines such as copiers and printers, and more particularly, to touch dialogue user interface for programming such reproduction machines.

As reproduction machines such as copiers and printers become more complex and versatile in the jobs they can do, the user interface between the machine and the operator or user, which in essence permits the dialogue (i.e., the ability to talk) between operator and machine, must necessarily be expanded if full and efficient utilization of the machine is to be realized. A suitable interface must not only provide the controls, displays, and messages necessary to activate, program, monitor, and maintain the machine, but must do so in an efficient, relatively simple, and straightforward way. For if the user interface fails in this respect, the abilities that were designed and built into the machine and which the machine owner pays for, may never be realized.

Additionally, in more complex machines, various operator skill levels must typically be provided for. At one extreme is the dedicated user; that is, the user whose principal task is to run copying jobs and/or supervising others who do. This type of operator typically requires extensive and costly training in order to become fully skilled in all the potential programming possibilities and operating situations that are possible. At the other extreme is the casual user whose principal task is running copies and doing relatively simple jobs such as jam clearance, consumable replacement, and the like. This latter type of operator requires only minimal training, and typically comprises the smallest group of operators for the machine. Intertwined with the need to accommodate operators of these and other skill levels and training is the need to maximize productivity and ease of use while enabling successful operation, not only in the country of origin but also in foreign countries where the machine is intended to be marketed.

One potential system for providing a user interface that will meet the needs and requirements of modern day reproduction machines is to use a soft touch control monitor, either alone or in combination with other hard touch control items, such as a keyboard. However, prior touch control systems have been limited in the amount of program selections that they provide, and have been afflicted with displays that are often confusing and inadequate in attempting to accommodate all of the various machine permutations and operational modes possible. Further, prior art touch control systems usually impose a strictly operating protocol that requires the operator to step forward and backward through strict predefined selection sequences in order to program the machine, reducing programming efficiency.

In the prior art for example, a touch screen system which emulates three dimensional objects on a CRT touch screen in two dimensional form is found in U.S. patent No. 4,649,499 to Sutton et al. Another U.S. Patent, No 4,521,870 to Babbel et al, discloses an arrangement for editing audio or video work in which various options are displayed on a touch screen that allows the operator to perform different editing functions by touching selected characters displayed on the screen. U.S. Patent No. 4,646,250 to Childress discloses a data entry screen in which information is displayed that identifies to the user or operator fields where data may or must be entered, such identification taking the form of highlighting. And, U.S. Patent No. 3,757,037 to Bialek, discloses a catalog system displayed on a CRT with cooperating keyboard for making selections and changes, the display being stored in the form of a tape cassette or cartridge, while U.S. Patent No. 4,566,001 to Moore et al discloses a combination CRT and keyboard with touch strips along the sides of the CRT to enable the image displayed on the CRT screen to be manipulated.

The present invention is intended to provide an improved touch screen system for programming and operating a reproduction machine. According to the invention, there is provided a reproduction machine having plural interactive sub-systems cooperable to produce copies from document originals, including:

a) a screen providing a display of programming selections for programming said machine;

b) touch responsive means associated with the screen to enable programming selections touched to be identified;

c) memory means for retaining said programming selections for use in operating said machine;

d) control means for operating said machine in response to the selected program; and

e) means for producing on the screen a display wherein said display depicts a primary card file composed of plural primary file cards, each of said primary file cards when selected by being touched causing the depiction of a secondary card file composed of additional, secondary, file cards and of an adjoining area of the display for use in making touch programming selections using the secondary file card selected, wherein the touch responsive means are arranged such that each of said primary and secondary file cards have an identifying tab which when touched selects that file card for display.

Thus in use of the invention, there is simulated on a touch sensitive CRT screen a first card file with plural file folders, each file folder when opened displaying for touch access a second relatively smaller card file with plural file cards together with an adjacent work area, each of the file folders and file cards having an identifying touch tab. Each of the file cards when opened displays a plurality of first level program touch selections which when opened display in the work area a job programming file with plural second level program touch selections for programming the machine. Touching a selected file folder tab opens the file folder associated with the tab and displays the second card file associated with the file folder on the screen; touching a selected file card tab displayed on the screen opens the file card associated with the tab and displays the first level program touch selections and work area associated with the card file; touching a selected first level program touch selection displays in the work area the second level program touch selections associated with the selected first level program touch selection; and touching selected ones of the second level program touch selections in the work area provides program input for the machine.

A reproduction machine in accordance with the invention will now be described, by way of example, with reference to the accompanying drawings, in which:-

Figure 1 is an isometric view of an illustrative reproduction machine incorporating the touch dialogue User Interface (U.I) of the present invention;

Figure 2 is a schematic elevational view depicting various operating components and sub-systems of the machine shown in Figure 1;

Figure 3 is a block diagram of the operating control systems and memory for the machine shown in Figure 1;

Figure 4 is a schematic elevational view showing the finishing sub-system of the machine shown in Figure 1;

Figure 5 is a front view of the U.I. color touch monitor showing the soft button display screen and hard button control panel;

Figure 6 is a front view of the touch monitor screen with the principal elements of the soft touch dialogue displayed;

Figure 7 is an isometric view showing the touch control LED and photodiode pwb's bordering the monitor screen;

Figures 8-9 are flow charts of touch screen operation in response to "finger down";

Figure 10 is a flow chart of touch screen operation in response to "finger dragged";

Figures 11-13 are flow charts of touch screen operation in response to "remove finger";

Figure 14 is a flow chart depicting "active behavior" of the soft touch scroll buttons;

Figure 15 is a flow chart depicting reset icon operation in response to "remove finger";

Figure 16 is a flow chart depicting the U.I. operating states;

Figure 17 is a front view depicting the touch monitor screen display in the CURRENT job mode following touch selection of the STANDARD file folder;

Figure 18 is a front view of the touch monitor screen shown in Figure 17 depicting the touch selection icons that are displayed in the work area as a result of touch selection of the PAPER icon on the PROGRAM scorecard;

Figure 19 is a flow chart of the Top Level Entry sequence resulting from touch selection of the PAPER icon shown in Figure 18;

Figure 20 is a flow chart of the Workarea Activity resulting from touch selection of a PAPER SUPPLY or STOCK icon shown in Figure 18;

Figure 21 is a flow chart of the Tray Selection sequence resulting from touch selection of one of the PAPER SUPPLY icons shown in Figure 18;

Figure 22 is a flow chart of the Autoswitch Selection sequence resulting from touch selection of the AUTOSWITCH icon shown in Figure 18;

Figure 23 is a flow chart of the Top Level Entry Display sequence resulting from touch selection of one of the STOCK icons shown in Figure 18;

Figure 24 is a flow chart of the Workarea activity resulting from touch selection of one of the STOCK icons shown in Figure 18;

Figure 25 is a front view of the touch monitor screen shown in Figure 17 depicting the touch selection icons that are displayed in the work area as a result of touch selection of the REDUCE/ENLARGE icon on the PROGRAM scorecard;

Figure 26 is a flow chart of the workarea activity resulting from touch selection of one of the REDUCE/ENLARGE selection icons shown in Figure 25;

Figure 27 is a front view of the touch monitor screen shown in Figure 17 depicting the touch selection icons that are displayed in the work area as a result of touch selection of the SIDES IMAGED icon on the PROGRAM scorecard;

Figure 28 is a flow chart of the Sides Imaged Selection sequence resulting from touch selection of one of the SIDES IMAGED icons shown in Figure 27;

Figure 29 is a front view of the touch monitor screen shown in Figure 17 depicting the touch selection icons

EP 0 331 329 B1

that are displayed in the work area as a result of touch selection of the SHIFT icon on the PROGRAM scorecard;

Figure 30 is a flow chart of the SHIFT Work Area Selections resulting from touch selection of one of the SHIFT icons shown in Figure 29;

Figure 31 is a front view of the touch monitor screen shown in Figure 17 depicting the touch selection icons that are displayed in the work area as a result of touch selection of the TRIM icon on the PROGRAM scorecard;

Figure 32 is a flow chart of the TRIM Work Area Selections resulting from touch selection of one of the TRIM icons shown in Figure 31;

Figure 33 is a front view of the touch monitor screen shown in Figure 17 depicting the touch selection icons that are displayed in the work area as a result of touch selection of the COPY QUALITY icon on the PROGRAM scorecard;

Figure 34 is a front view of the touch monitor screen depicting the touch selection icons that are displayed in the work area as a result of touch selection of the SPECIAL CONTROL icon shown in Figure 33;

Figure 35 is a flow chart of the Copy Quality First Level Workarea Activity resulting from touch selection of one of the COPY QUALITY:BASIC CONTROL icons shown in Figure 33;

Figure 36 is a flow chart of the Copy Quality Second Level Workspace Selections resulting from touch selection of one of the COPY QUALITY:SPECIAL CONTROL icons shown in Figure 34;

Figure 37 is a front view of the touch monitor screen shown in Figure 17 depicting the touch selection icons that are displayed in the work area as a result of touch selection of the OUTPUT icon on the PROGRAM scorecard;

Figure 38 is a flow chart of the Copy Output Workarea Activity resulting from touch selection of one of the OUTPUT or FINISHER icons shown in Figure 37;

Figure 39 is a front view of the touch monitor screen shown in Figure 17 depicting the touch selection icons that are displayed in the work area as a result of touch selection of the RETRIEVE PROGRAMS icon on the PROGRAM scorecard;

Figure 40 is a flow chart of the Saved Jobs Work Area sequence resulting from touch selection of one of the RETRIEVE PROGRAMS icons shown in Figure 39;

Figure 41 is a front view of the touch monitor screen shown in Figure 17 depicting the touch selection exception programming icons that are displayed on selection of the EXCEPTION scorecard;

Figure 42 is a flow chart of the Top Level Entry sequence resulting from touch selection of the EXCEPTION scorecard touch tab;

Figure 43 is a flow chart to the Feature Workarea Entry sequence resulting from touch selection of one of the exception programming icons on the EXCEPTION scorecard;

Figure 44 is a flow chart of the exception programming Exit sequence;

Figure 45 is a flow chart of the Programming Conflict In Feature Work area sequence during exception programming;

Figure 46 is a flow chart of the Page Selection Workarea Activity resulting from touch selection of one of the exception programming icons shown in Figure 41;

Figure 47 is a flow chart of the Page Selection Workarea Activity resulting from touch selection of the exception programming Delete Button shown in Figure 41;

Figure 48 is a flow chart of the Document Selection Workarea Activity resulting from touch selection of the exception programming Delete All Button shown in Figure 41;

Figures 49-50 are flow charts of the Document Selection Workarea Activity resulting from touch selection of the exception programming Document Selection Scroll icon shown in Figure 41;

Figure 51 is a flow chart of the Document Selection Workarea Activity resulting from touch selection of the Exception Review Scroll icon shown in Figure 41;

Figure 52 is a flow chart of the Document Selection Workarea Activity resulting from touch selection of the Group Button icon shown in Figure 41;

Figure 53 is a front view depicting the touch monitor screen display in the CURRENT job mode following touch selection of the FANFOLD file folder; and

Figure 54 is a front view depicting the touch monitor screen display in the CURRENT job mode following touch selection of the OVERSIZED file folder.

While the present invention will hereinafter be described in connection with a preferred embodiment thereof, it will be understood that it is not intended to limit the invention to that embodiment. On the contrary, it is intended to cover all alternatives, modifications, and equivalents, as may be included within the scope of the invention as defined by the appended claims.

For a general understanding of the features of the present invention, reference is made to the drawings.

4

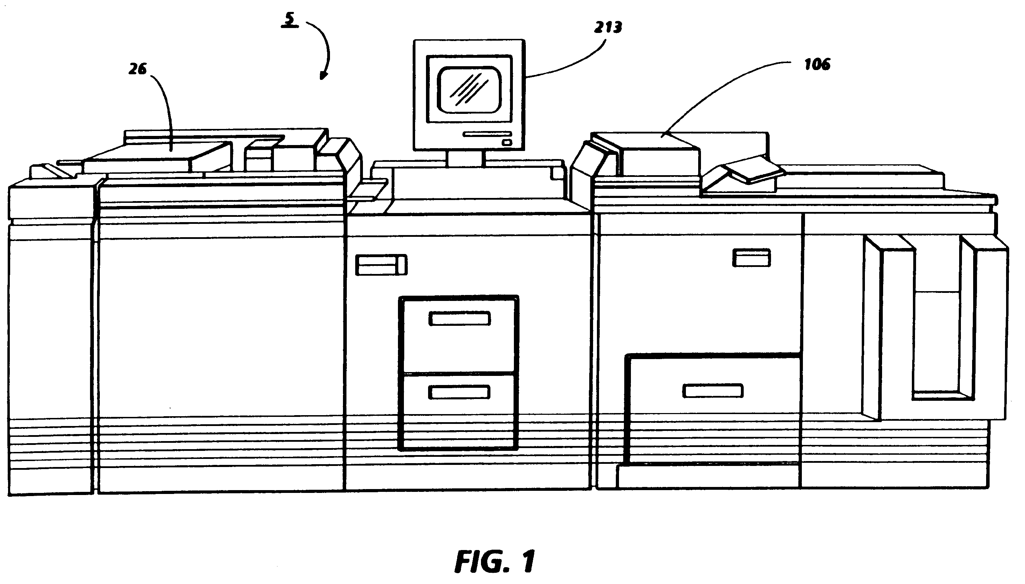

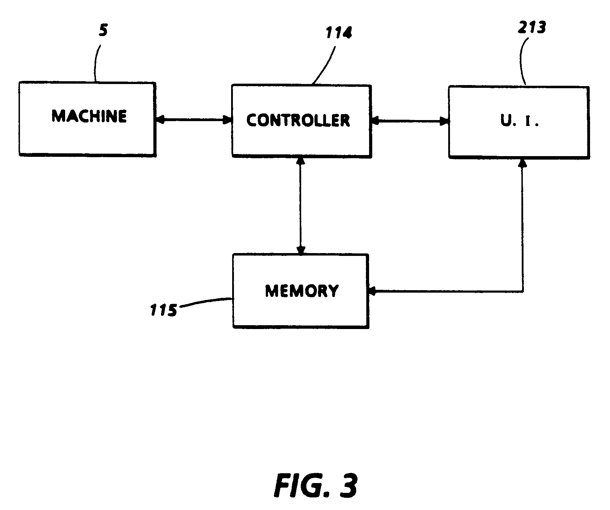

In the drawings, like reference numerals have been used throughout to identify identical elements. Referring to Figures 1, 2, and 3, there is shown an electrophotographic reproduction machine 5 composed of a plurality of programmable components and sub-systems which cooperate to carry out the copying or printing job programmed through the touch dialogue User Interface (U.I.) of the present invention. It will become evident from the following discussion that the touch dialogue U.I. of the present invention may be employed in a wide variety of devices and is not specifically limited in its application to the particular embodiment depicted herein.

Machine 5 employs a photoconductive belt 10. Belt 10 is entrained about stripping roller 14, tensioning roller 16, idler rollers 18, and drive roller 20. Drive roller 20 is rotated by a motor coupled thereto by suitable means such as a belt drive. As roller 20 rotates, it advances belt 10 in the direction of arrow 12 through the various processing stations disposed about the path of movement thereof.

Initially, the photoconductive surface of belt 10 passes through charging station A where two corona generating devices, indicated generally by the reference numerals 22 and 24 charge photoconductive belt 10 to a relatively high, substantially uniform potential. Next, the charged photoconductive belt is advanced through imaging station B. At imaging station B, a document handling unit 26 sequentially feeds documents from a stack of documents in a document stacking and holding tray into registered position on platen 28. A pair of Xenon flash lamps 30 mounted in the optics cavity illuminate the document on platen 28, the light rays reflected from the document being focused by lens 32 onto belt 10 to expose and record an electrostatic latent image on photoconductive belt 10 which corresponds to the informational areas contained within the document currently on platen 28. After imaging, the document is returned to the document tray via a simplex path when either a simplex copy or the first pass of a duplex copy is being made or via a duplex path when a duplex copy is being made.

The electrostatic latent image recorded on photoconductive belt 10 is developed at development station C by a magnetic brush developer unit 34 having three developer rolls 36, 38 and 40. A paddle wheel 42 picks up developer material and delivers it to the developer rolls 36, 38. Developer roll 40 is a cleanup roll while a magnetic roll 44 is provided to remove any carrier granules adhering to belt 10.

Following development, the developed image is transferred at transfer station D to a copy sheet. There, the photoconductive belt 10 is exposed to a pre-transfer light from a lamp (not shown) to reduce the attraction between photoconductive belt 10 and the toner powder image. Next, a corona generating device 46 charges the copy sheet to the proper magnitude and polarity so that the copy sheet is tacked to photoconductive belt 10 and the toner powder image attracted from the photoconductive belt to the copy sheet. After transfer, corona generator 48 charges the copy sheet to the opposite polarity to detack the copy sheet from belt 10.

Following transfer, a conveyor 50 advances the copy sheet bearing the transferred image to fusing station E where a fuser assembly, indicated generally by the reference numeral 52 permanently affixes the toner powder image to the copy sheet. Preferably, fuser assembly 52 includes a heated fuser roller 54 and a pressure roller 56 with the powder image on the copy sheet contacting fuser roller 54.

After fusing, the copy sheets are fed through a decurler 58 to remove any curl. Forwarding rollers 60 then advance the sheet via duplex turn roll 62 to gate 64 which guides the sheet to either finishing station F or to duplex tray 66, the latter providing an intermediate or buffer storage for those sheets that have been printed on one side and on which an image will be subsequently printed on the second, opposed side thereof. The sheets are stacked in duplex tray 66 face down on top of one another in the order in which they are copied.

To complete duplex copying, the simplex sheets in tray 66 are fed, in seriatim, by bottom feeder 68 back to transfer station D via conveyor 70 and rollers 72 for transfer of the second toner powder image to the opposed sides of the copy sheets. The duplex sheet is then fed through the same path as the simplex sheet to be advanced to finishing station F.

Copy sheets are supplied from a secondary tray 74 by sheet feeder 76 or from the auxiliary tray 78 by sheet feeder 80. Sheet feeders 76, 80 are friction retard feeders utilizing a feed belt and take-away rolls to advance successive copy sheets to transport 70 which advances the sheets to rolls 72 and then to transfer station D.

A high capacity feeder 82 is the primary source of copy sheets. Tray 84 of feeder 82, which is supported on an elevator 86 for up and down movement, has a vacuum feed belt 88 to feed successive uppermost sheets from the stack of sheets in tray 84 to a take away drive roll 90 and idler rolls 92. Rolls 90, 92 guide the sheet onto transport 93 which in cooperation with idler roll 95 and rolls 72 move the sheet to transfer station station D.

After transfer station D, photoconductive belt 10 passes beneath corona generating device 94 which charges any residual toner particles remaining on belt 10 to the proper polarity. Thereafter, a pre-charge erase lamp (not shown), located inside photoconductive belt 10, discharges the photoconductive belt in preparation for the next charging cycle. Residual particles are removed from belt 10 at cleaning station G by an electrically biased cleaner brush 96 and two de-toning rolls 98 and 100.

The various functions of machine 5 are regulated by a controller 114 which preferably comprises one or more programmable microprocessors. The controller provides a comparison count of the copy sheets, the number of documents being recirculated, the number of copy sheets selected by the operator, time delays, jam corrections, etc. As will appear, programming and operating control over machine 5 is accomplished through a U.I. 213. Operating and control information, job programming instructions, etc. are stored in a suitable memory 115 which includes both ROM and RAM memory types, the latter being also used to retain jobs programmed through U.I. 213. And while a single memory is illustrated, it is understood that memory 115 may comprise a series of discrete memories. Conventional sheet path sensors or switches may be utilized to keep track of the position of the documents and the copy sheets. In addition, the controller regulates the various positions of the gates depending upon the mode of operation selected.

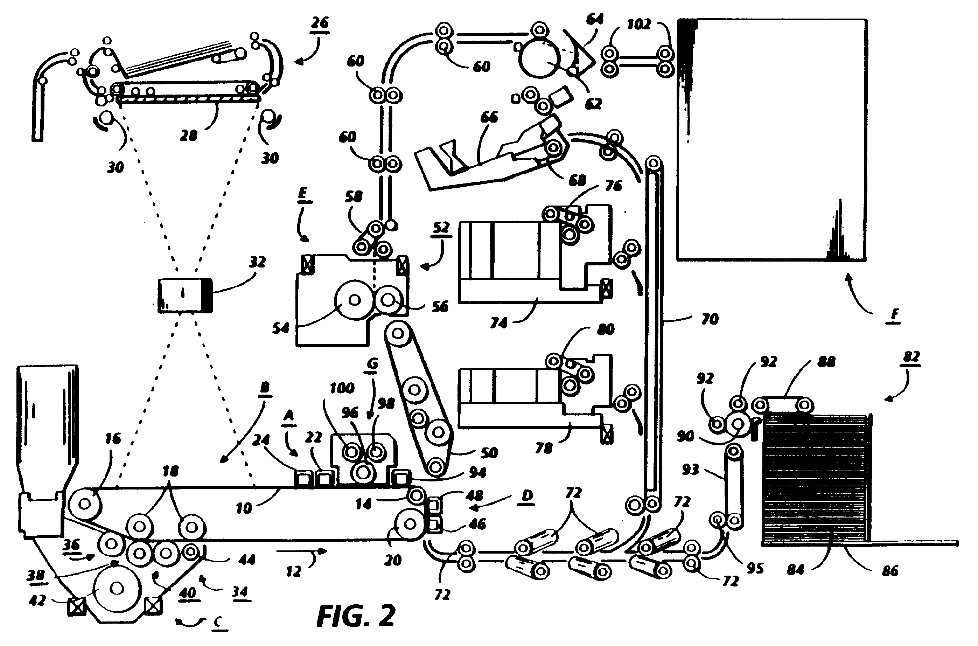

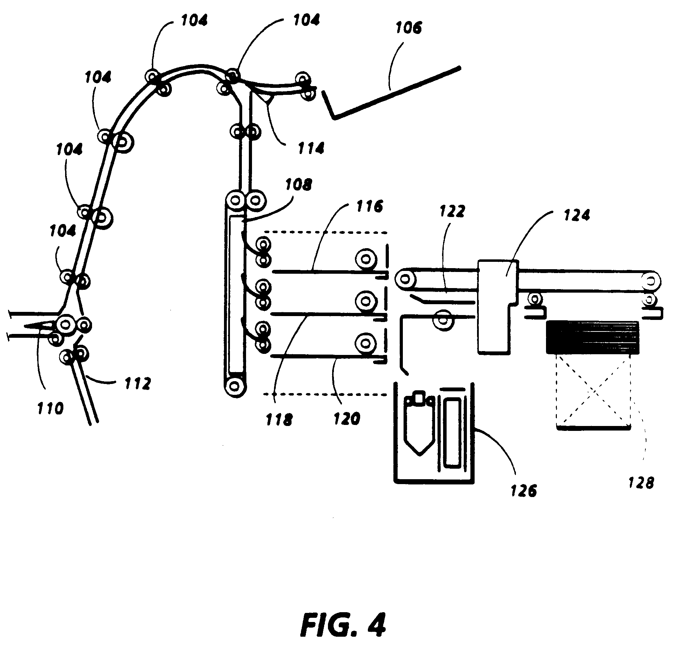

Referring now to Figure 4, finishing station F receives fused copies from rolls 102 (Figure 2) and delivers them to gate 110. Gate 110 diverts the copy sheet to either registration rolls 104 or inverter 112. Copy sheets diverted to rolls 104 are advanced to gate 114 which diverts the sheets to either the top tray 106 or to vertical transport 108. Transport 108 transports sheets to any one of three bins 116, 118 or 120 which are used to compile and register sheets into sets. The bins are driven up or down by a bidirectional motor adapted to position the proper bin at the unloading position where a set transport 122 having a pair of set clamps is used to grasp and transport sets from the bins to either sheet stapling apparatus 124 when it is desired to staple the sets, or to binder 126 when it is desired to bind the sets, or to stacker 128 when unfinished sets are desired.

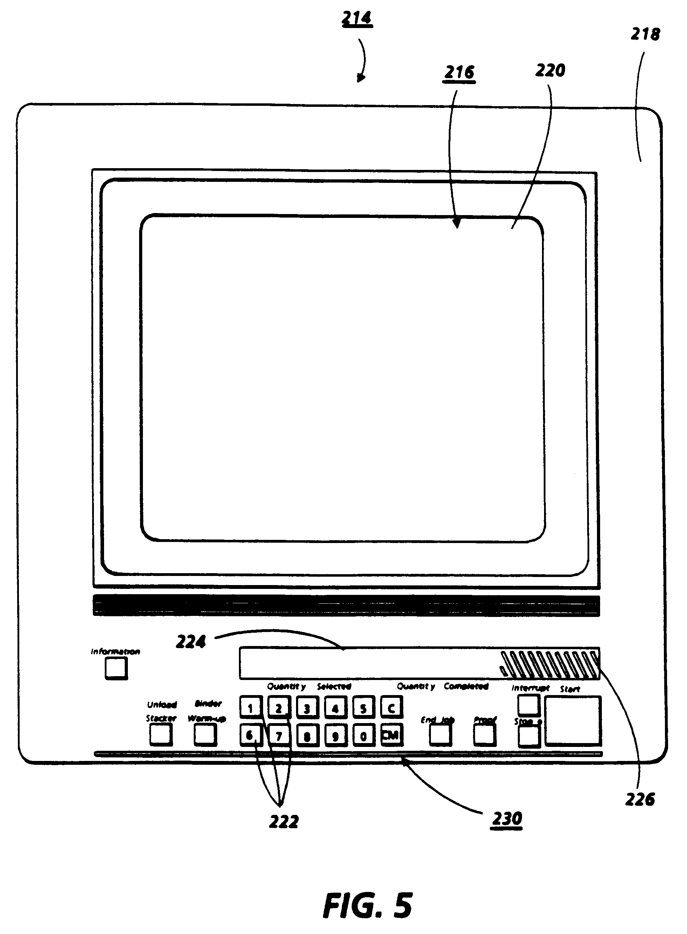

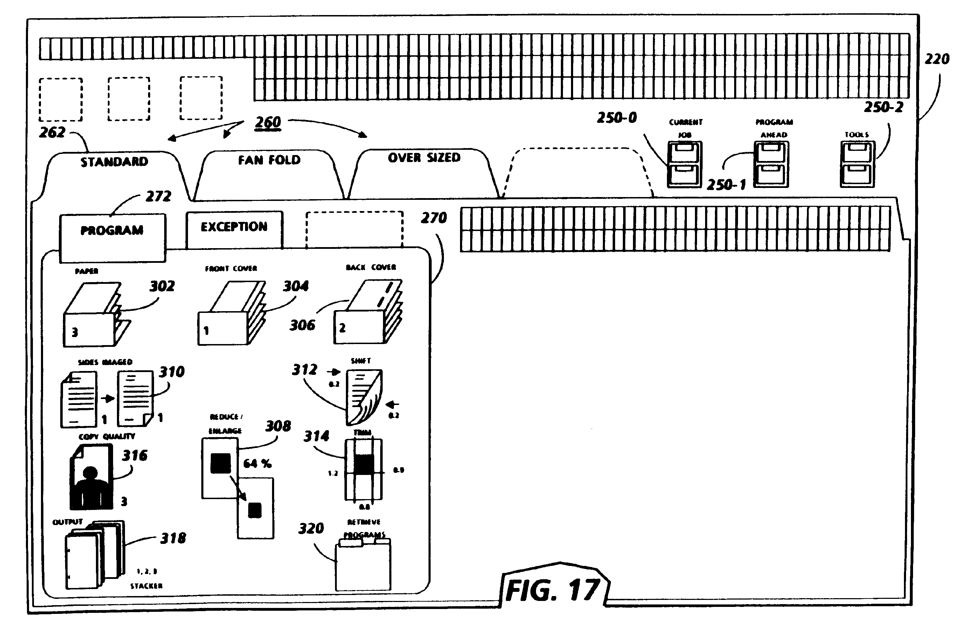

Referring to Figure 5, there is shown the color touch monitor 214 for the touch dialogue U.I. 213 of the present invention. As will appear, monitor 214 provides an operator user interface with hard and soft touch control buttons enabling communication between operator and machine 10. Monitor 214 comprises a suitable color cathode ray tube 216 of desired size and type having a peripheral framework forming a decorative bezel 218 thereabout. Bezel 218 frames a rectangular video display screen 220 on which soft touch buttons in the form of icons or pictograms (seen for example in Figure 17) and messages are displayed as will appear together with a series of hard control buttons 222 and 10 seven segment displays 224 therebelow. Displays 224 provide a display for copy "Quantity Selected", copy "Quantity Completed", and an area 226 for other information.

Hard control buttons 222 comprise "0-9" buttons providing a keypad 230 for programming copy quantity, code numbers, etc.; a clear button "C" to reset display 224; a "Start" button to initiate print; a clear memory button "CM" to reset all dialogue mode features to default and place a "1" in the least significant digit of display 224; an "Unload Stacker" button requesting transfer of the contents of stacker 128; a "Stop" button to initiate an orderly shutdown of machine 5; a "Binder Warm-up" button to initiate warm-up of binder 126; an "Interrupt" button to initiate a job interrupt; a "Proof" button to initiate making of a proof copy; an "End Job" button to end the current job; and an "i" button to initiate a request for information.

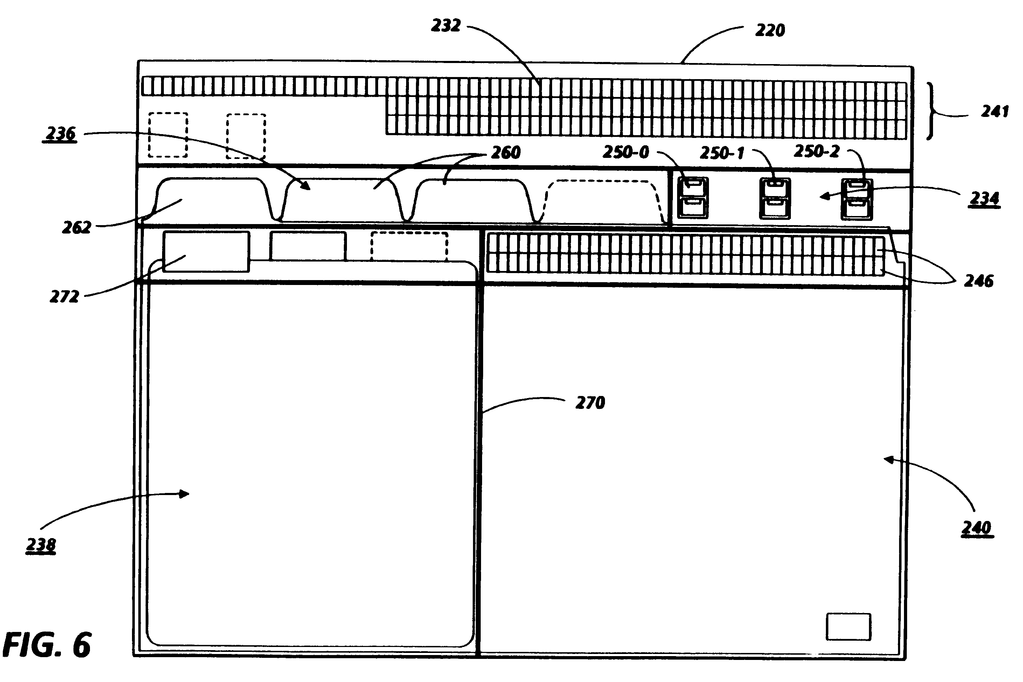

Referring now to Figure 6, for dialogue purposes, screen 220 of monitor 214 is separated into five basic display areas, identified as a message area 232, a dialogue mode selection area 234, a dialogue pathway selection area 236, a scorecard selection area 238, and a work selection area 240.

Message area 232 consists of 3 lines 241 located at the top of screen 220. In addition, two programming conflict message lines 246 are provided in work selection area 240. The dialogue mode selection area 234 comprises an active area containing certain top level dialogue mode controls available to the operator. The mode controls are soft touch buttons 250-0, 250-1, and 250-2 in the form of icons representing file cabinets located on the right side of the screen 220 directly below message area 232.

The dialogue pathway selection area 236 and the scorecard selection area 238 basically simulate a card within a card filing system with primary dialogue pathway file folders 260 and secondary file cards, the latter being referred to as scorecards 270. As will appear, scorecards 270 provide additional programming pathway options. File folders 260 and scorecards 270 are arranged in overlaying relation one in front of the other. The dialogue pathway file folders 260, which are located beneath message area 232 and which extend up into the dialogue mode area 234, each have an outwardly projecting touch tab 262 along the top edge identifying the dialogue pathway represented by the folder, as for example STANDARD, FANFOLD, OVERSIZED, etc. (see Figure 17 for example). To allow the file folders 260 to be distinguished from one another without the need to reshuffle the folders each time it is desired to display a folder hidden behind the folder currently displayed, each tab 262 is offset from the other so that tabs 262 are always visible whatever folder is displayed.

Scorecard selection area 238 appears in the lower left corner of screen 220 beneath dialogue selection area 234 and extends to the border of work selection area 240. Scorecard selection area 238 contains a file of scorecards 270 which present the features (first level program selections) available with each of the dialogue pathway file folders 260. As seen in Figure 17 for example, area 238 displays the features (first level program selections) resident with the currently selected scorecard, such selections remaining at previously selected options until either timeout or the "CM" button (Figure 5) is pressed. Two or three scorecards 270 are typically provided, depending on the dialogue pathway file folder 260 selected. Scorecards 270 each comprise a relatively small file card arranged in overlaying relation to one another so as to simulate a second but smaller card file. Each scorecard 270 has a touch tab 272 displaying the programming pathway options available with the scorecard, such as PROGRAM, EXCEPTION, etc. Scorecard tabs 272 are offset from one another to enable the identity of each scorecard to be determined whatever its position in the scorecard file. Additionally, scorecard tabs 272 are shaped different than the dialogue pathway file folder tabs 262 to prevent confusion.

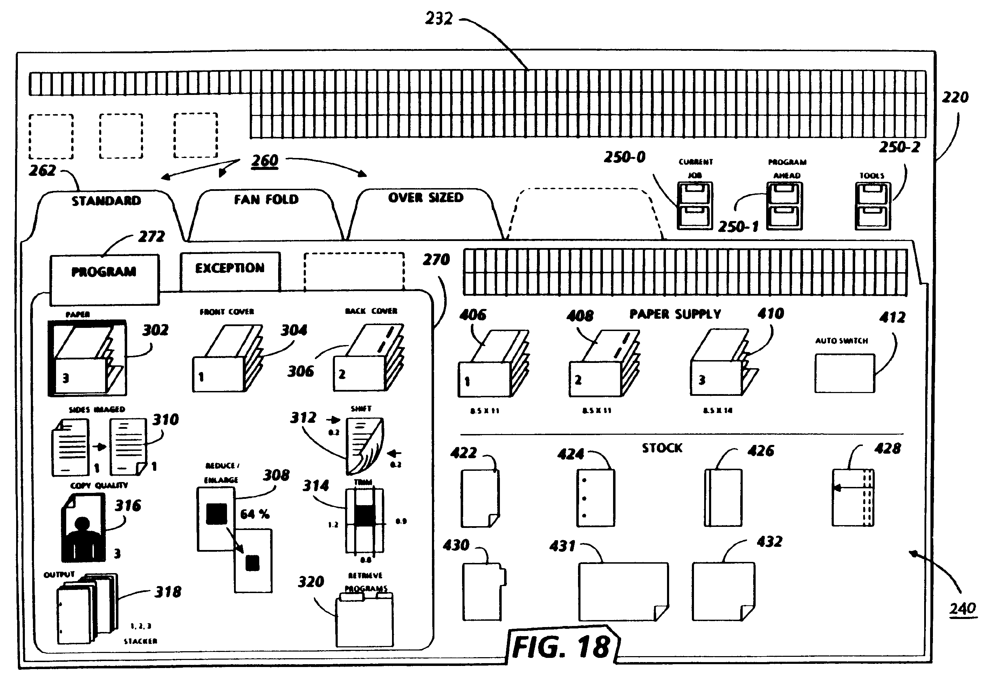

Work selection area 240 appears in the lower right portion of screen 220, area 240 being beneath the dialogue pathway area 236 and extending from the edge of scorecard selection area 238 to the right side of screen 220. The top two lines 246 of the work selection area 240 are reserved for programming conflicts and prompts with the remaining area used for displaying the feature options (second level program selections) available with the first level program selection that is touched on the scorecard currently selected, an example of which is seen in Figure 18. As will appear, the operator can scan and make a selection within the work area or pick another scorecard item.

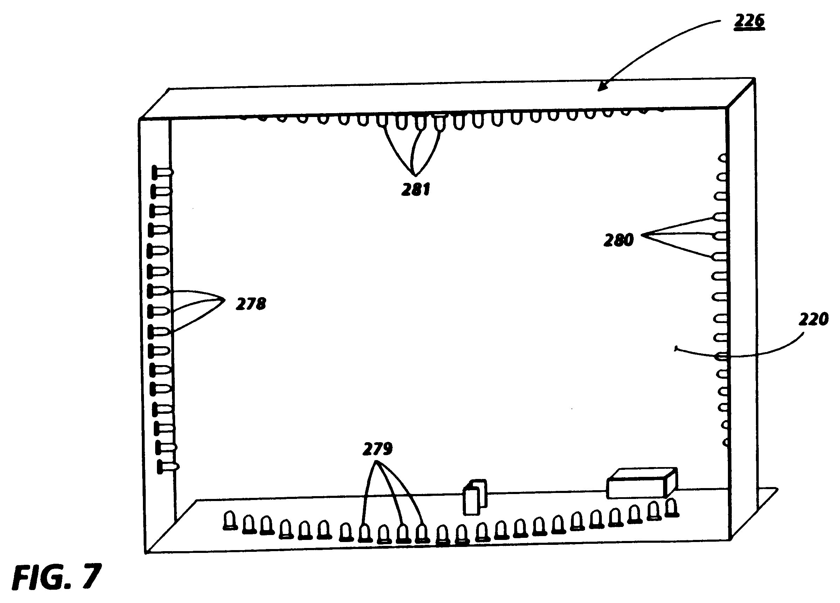

Referring particularly to Figure 7, mounted around the periphery of display screen 220 behind bezel 218 is a touch input system 226 which provides a pattern of invisible interruptable beams across the face of the screen 220 using light emitting diodes (LEDs) and photodetectors (PDs). In the example shown, two rows of LEDs 278, 279 are provided on separate Printed Wiring Boards (PWBs) along two adjoining sides of display screen 220. Two corresponding rows of PDs 280, 281 are provided on PWBs positioned on the remaining two sides of the display screen 220, the number of PDs 280, 281 being equal in number to and in opposed relationship to LEDs 278, 279. LEDs 278, 279 emit infrared rays which extend in generally parallel fashion across the face of the display screen 220 to the PDs 280, 281 opposite thereto.

LEDs 278, 279 and PDs 280, 281 cooperate to establish an X-Y coordinate system of invisible beams or rays across the face of the display screen 220 so that, when an operator touches a particular location on the screen 220, one or more of the beams are interrupted. Suitable control logic such as shown in U.S. Patent No. 4,267,443 to Carroll et al determines the average X and Y locations of the beams that are broken to identify the particular location on screen 220 touched by the operator.

While a specific touch input system 226 has been shown and described, other touch systems which are capable of providing an output signal indicating an area touched on a display screen may be envisioned.

In order for the soft touch buttons (i.e., icons) on screen 220 to provide information regarding both their current selection state and their current status, a display convention is provided that will allow the operator to quickly scan the display and determine current feature selections. Referring to Table I, unselected features that are selectable are indicated by an outlined icon with a shadowed background while selected features that are selectable are indicated by a colorfilled icon with a shadowed background. Unselected features that are not selectable are indicated by an outlined icon without a shadowed background while selected features that are not selectable are indicated by a colorfilled icon without a shadowed background.

## TABLE I

|  | SELECTABLE | NOT SELECTABLE |
|---|---|---|
| SELECTED | COLORFILLED SHADOW | COLORFILLED NO SHADOW |
| UNSELECTED | OUTLINED SHADOW | OUTLINED NO SHADOW |

In cases where an unselected feature that is not selectable is touched, a message will be displayed in the programming conflict area 246 of screen 220.

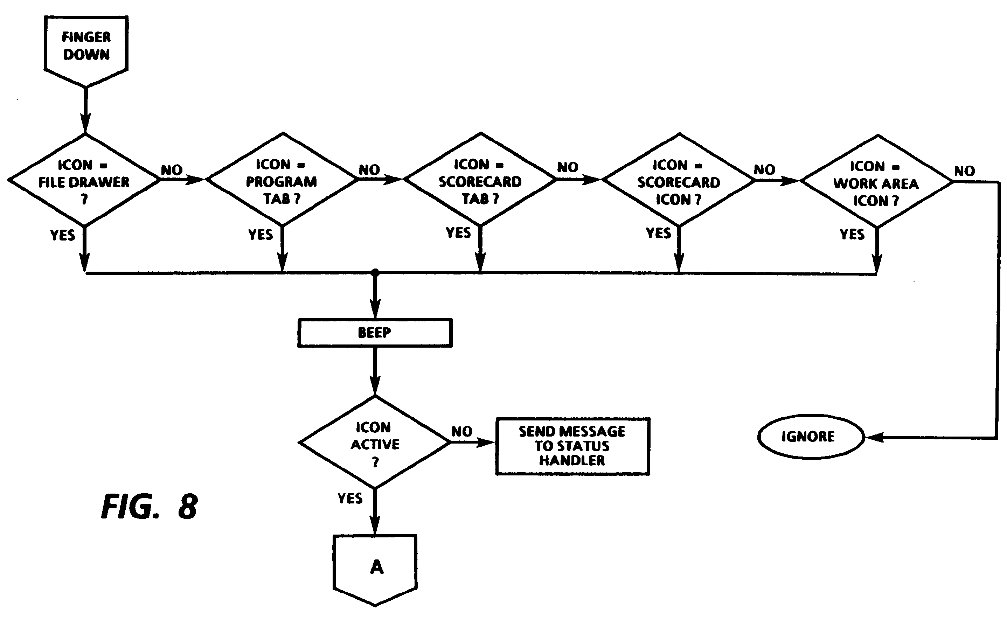

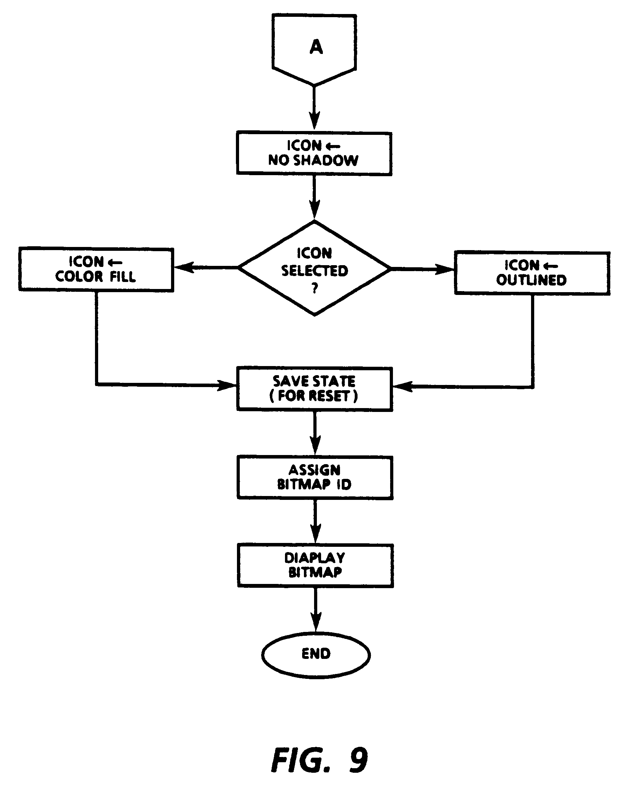

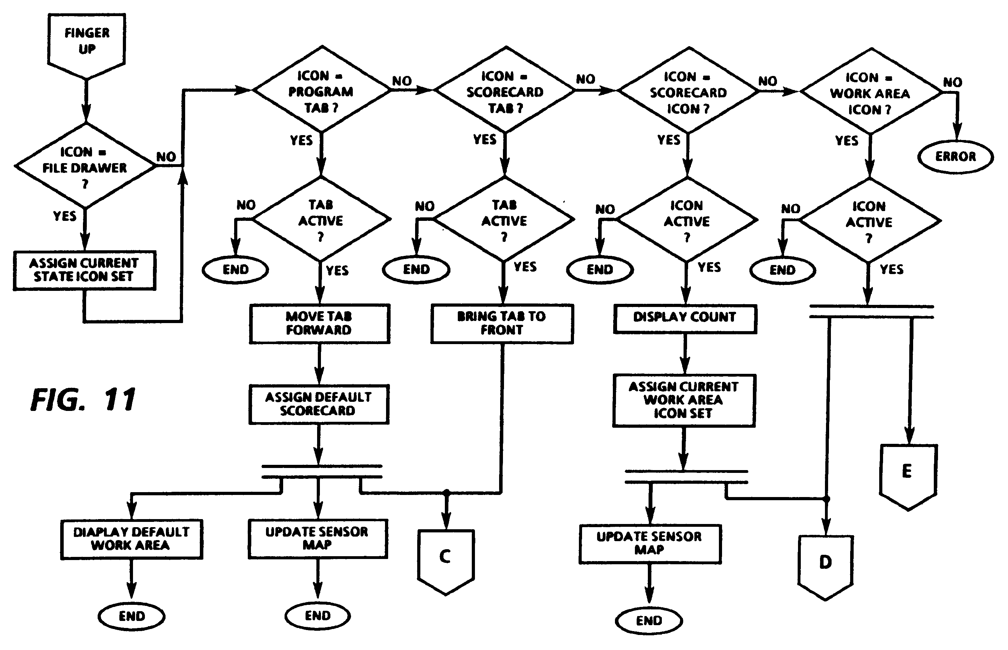

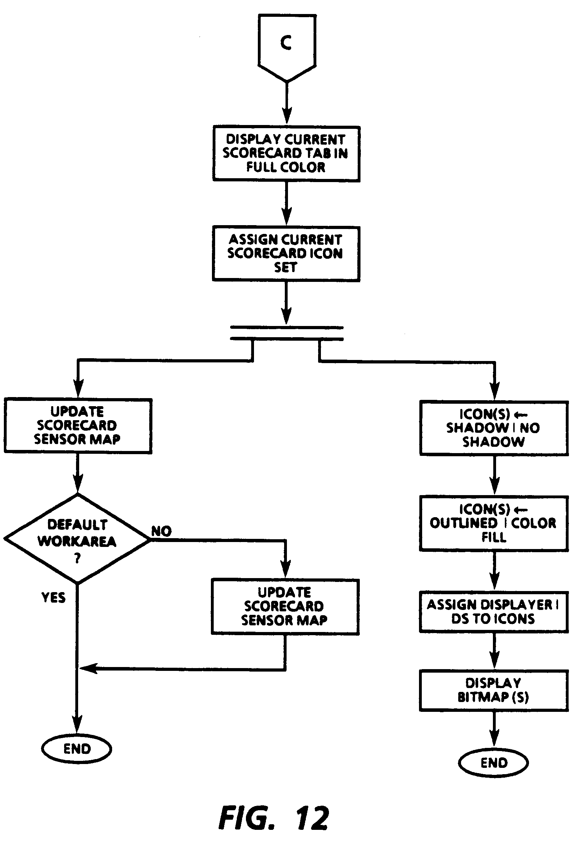

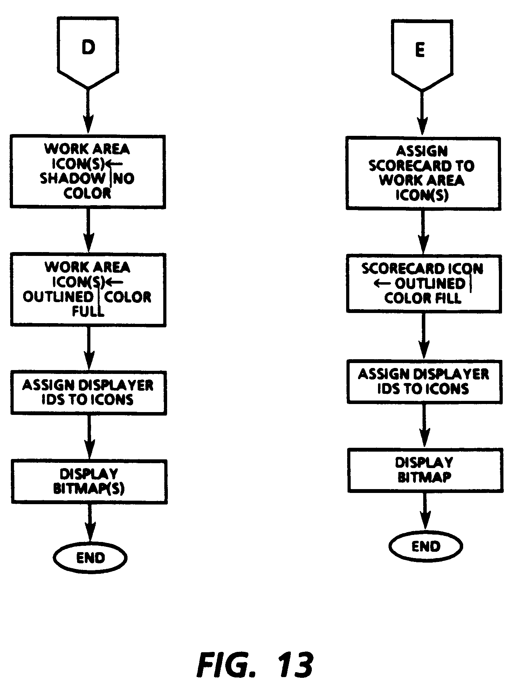

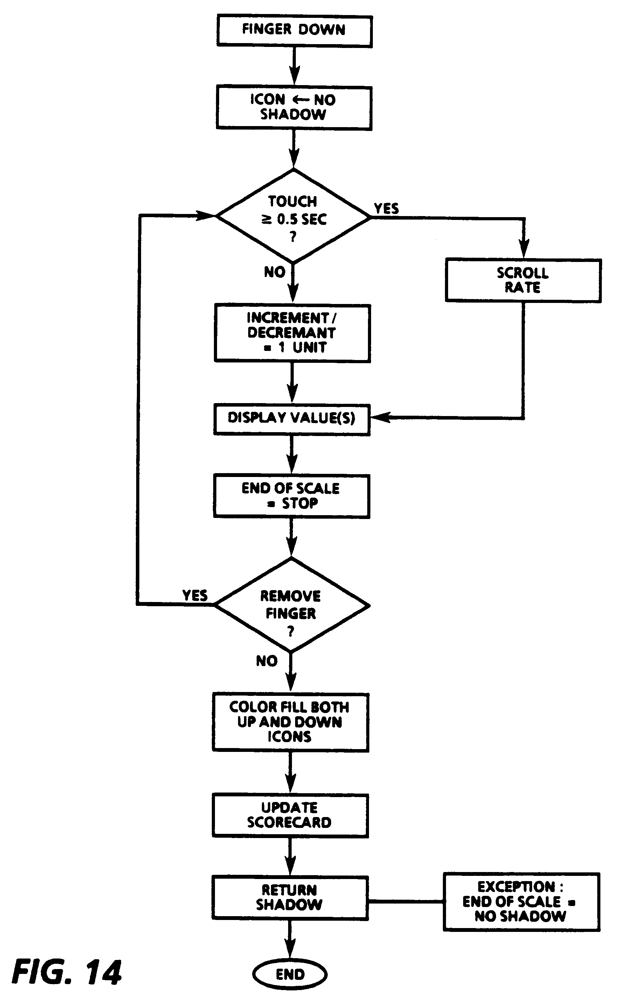

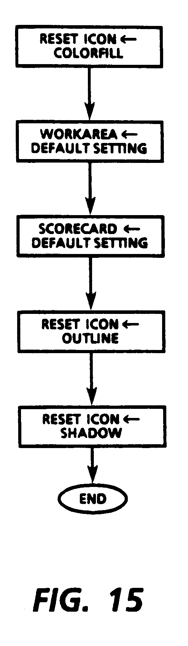

Referring particularly to Figures 8, 9 and 11-15, if an operator touches a selectable icon, a visual change of the selected icon occurs as well as an audio tone (BEEP). If the finger is withdrawn from the region, the selection will be accepted and the icon will change again to indicate the selection as described above. If the operator touches an unselectable region, an audio tone and warning message occurs upon exit. Where an operator touches screen 220 in two places, the system will accept the first touch encountered. In the case where the operator breaks more than 3 consecutive sensor beams in one touch in either the X or Y axis, no selection will be indicated or accepted. Further, to prohibit the queueing of several selections before they are acknowledged to the operator, subsequent selections will not be accepted until initial selections are accepted and completed.

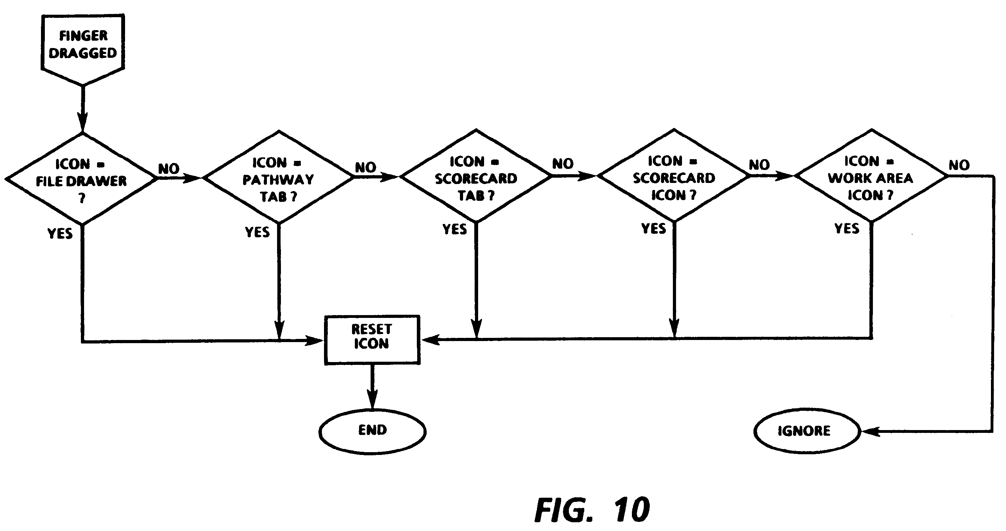

Referring particularly to Figure 10, if the operator enters the region of a selectable icon, but drags his finger outside the region, the icon within the region will be SELECTED. If the operator enters the region of another selectable icon, a tone will again be emitted and the icon will change. Withdrawing the finger will now cause the new selection to be accepted and the icon will change again to indicate the selection as described above.

If the operator touches the region of a selectable icon and then moves outside the region and withdraws his finger, the selection will be accepted. If a normally active region is rendered inactive, a message will temporarily appear when the region is entered.

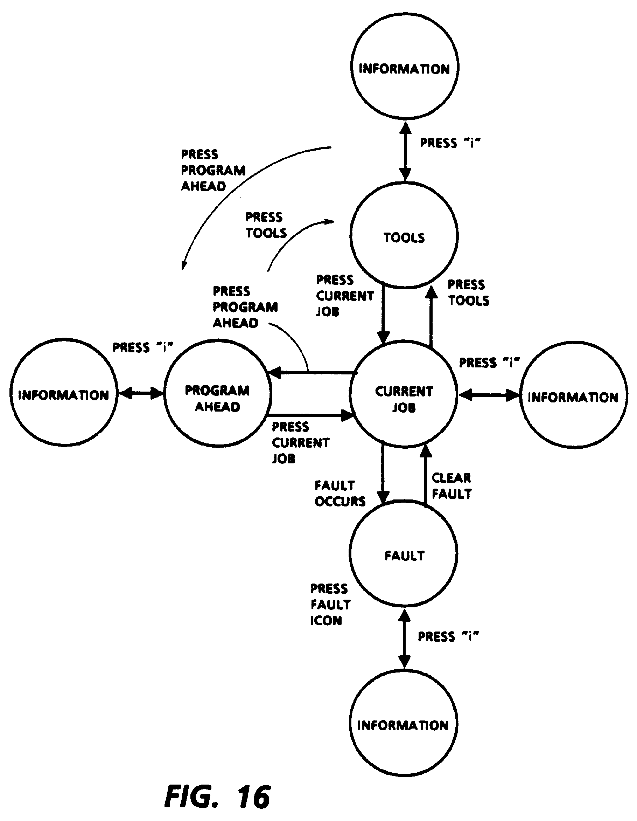

Referring particularly to Figure 16, the five operating states for U.I. 213 consist of (1) CURRENT JOB, (2) PROGRAM AHEAD (3) TOOLS, (4) FAULTS, and (5) INFORMATION. The solid line arrows of Figure 16 define the acceptable paths between the various states. The INFORMATION state is entered by means of the hard control button "i" on bezel 218 while the FAULTS state is in the form of a file card that overlays the file cards currently displayed in the event of a fault. The CURRENT JOB, PROGRAM AHEAD, and TOOLS states are entered by pressing the soft touch buttons 250-0, 250-1 and 250-2 respectively displayed on screen 220 in the Dialogue Mode Selection area 234.

In the ensuing discussion, U.I. 213 is presumed to be in the CURRENT JOB state as a result of actuation of soft touch button 250-0. The functions of this state are to inform the operator of the daily tasks that are necessary to keep machine 5 in good working order, to allow the operator to program feature selections for the current job, and to allow the operator to run a copying job. The CURRENT JOB state is sub-divided into three cases: (1) "Job Complete", (2) "Print", and (3) "Job Incomplete". "Job Complete" implies that a job is not in progress and has been completed, "Print" refers to a job in progress, and "Job Incomplete" refers to a job in progress that has either voluntarily or involuntarily been stopped or interrupted. "Job Complete" is defaulted to except for the "Print" case.

The CURRENT JOB state can exit to the PROGRAM AHEAD state by touching the PROGRAM AHEAD button 250-1 in any of the "Job Complete", "Job Incomplete" or "Print" cases; or can exit to the INFORMATION state by pressing the "i" hard button on bezel 218; or can exit to the TOOLS state by touching the TOOLS soft touch button 250-2 in either the "Job Complete" or "Job Incomplete" cases. In addition the CURRENT JOB state will automatically enter the FAULT state when a fault occurs.

When entered in the CURRENT JOB state, the dialogue pathway file folders 260 tabbed STANDARD, OVERSIZED, and FANFOLD are displayed providing various dialogue pathway selections in the form of scorecards 270. The function and the behavior of these tabbed file folders within the dialogue pathway selection area 236 for the "Job Complete", "Job Incomplete", and "Print" cases are as follows:

STANDARD: In the "Job Complete" case, this file folder provides standard programming options. As seen in Figure 17, the PROGRAM scorecard 270 is displayed with the following icons presented for selection to the operator: PAPER 302, FRONT COVER 304, BACK COVER 306, REDUCE/ENLARGE 308, TRIM 314, SHIFT 312, SIDES IMAGED 310, COPY QUALITY 316, OUTPUT 318, and RETRIEVE PROGRAMS 320. The EXCEPTION scorecard is also available with this file folder. The "Job Incomplete" and "Print" cases are inactive.

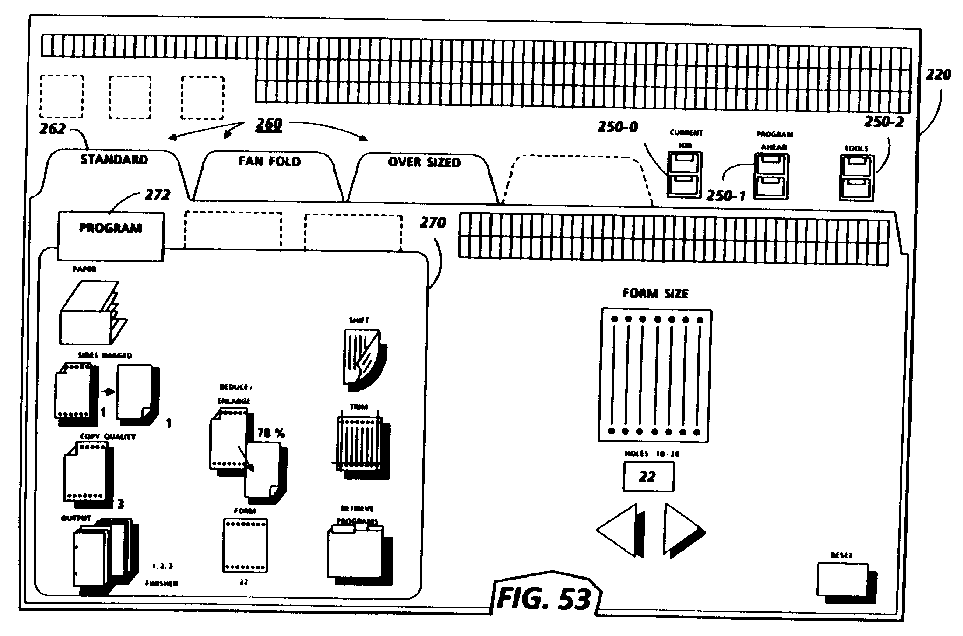

FANFOLD: As seen in Figure 53, in the "Job Complete" case, this file folder enables Computer Forms Feeding (CFF) input. This folder displays a scorecard tabbed PROGRAM having the following fanfold representing icons for selection by the operator: MAIN PAPER, REDUCE/ENLARGE, TRIM, SHIFT, SIDES IMAGED (1 - 1, 1 - 2 only), COPY QUALITY, FORM, OUTPUT, and RETRIEVE PROGRAMS. The "Job Incomplete" and "Print" cases are inactive.

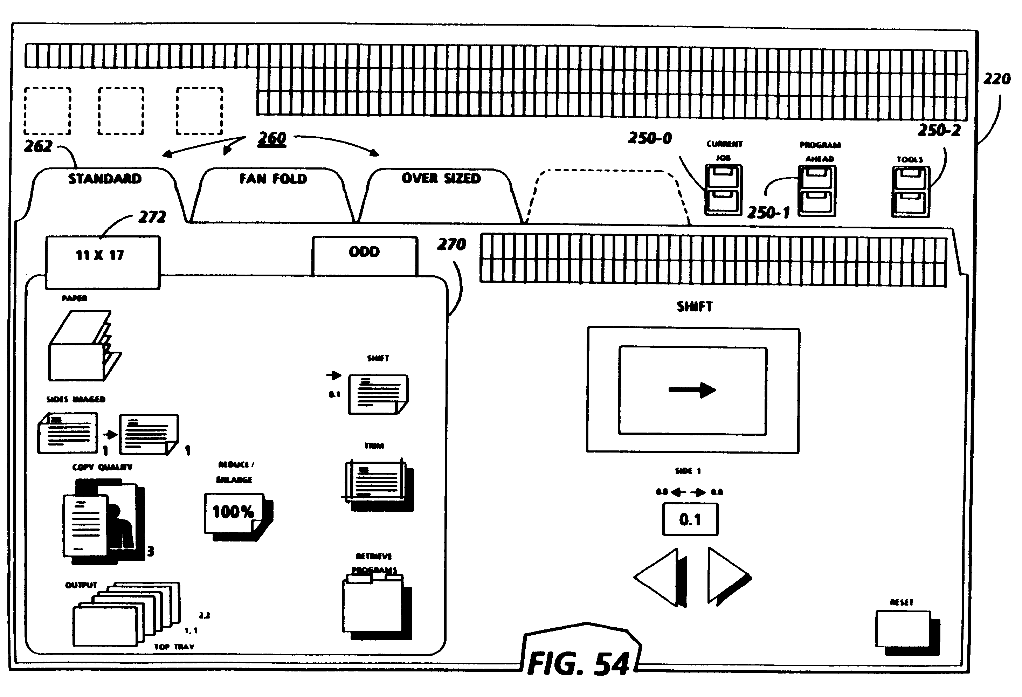

OVERSIZED: As seen in Figure 54, in the "Job Complete" case, this file folder enables a special 3 - pitch operating mode for copies exceeding 9 inches (1 inch= 25,4 mm) in width. This file folder displays scorecards tabbed 11 x 17 and ODD having selections allowing the operator to choose from special program dialogues for 17″ output greater than 9″ but less than 17″ and for odd size paper. The "Job Incomplete" and "Print" cases are inactive.

In the ensuing description, it is presumed that the STANDARD dialogue pathway file folder 260 has been selected by touching the tab "STANDARD". It will, however, be understood that a different one of the dialogue pathway file folders available during operation in the CURRENT JOB state may be selected by touching the tab of the file folder desired. Further, it will be understood that each of the file folders 260 includes one or more scorecards 270 with available programming selections in the form of icons, some or all of which may be the same or different from the ones discussed hereinbelow.

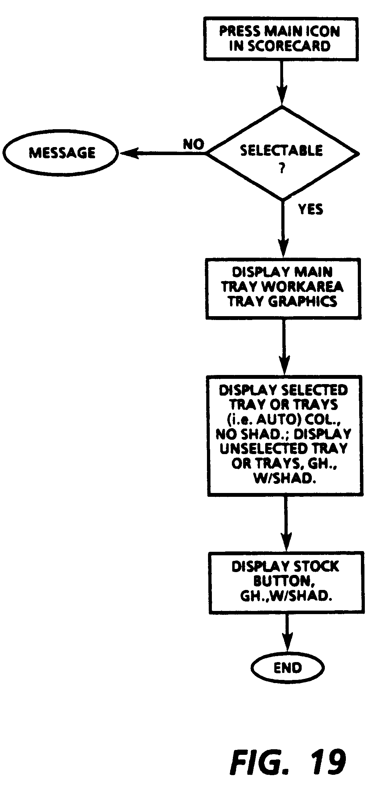

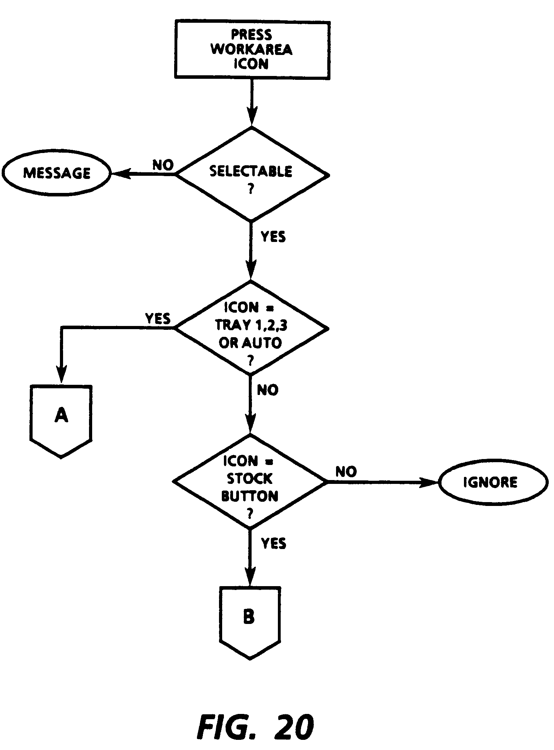

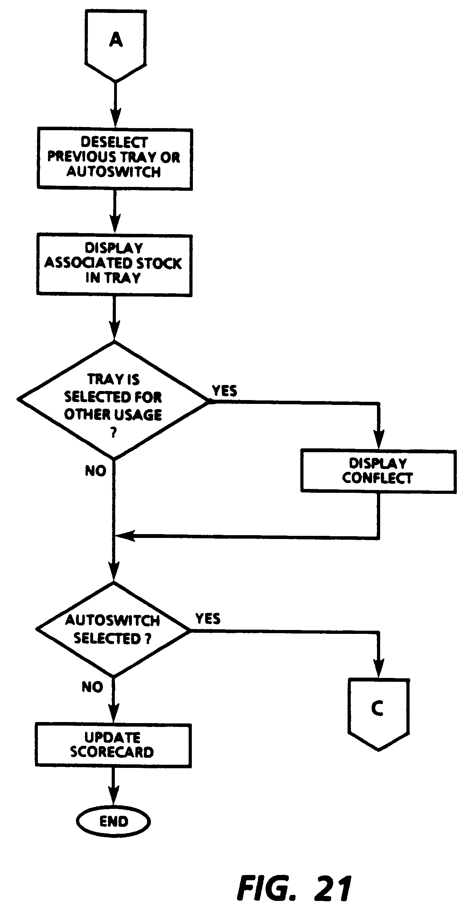

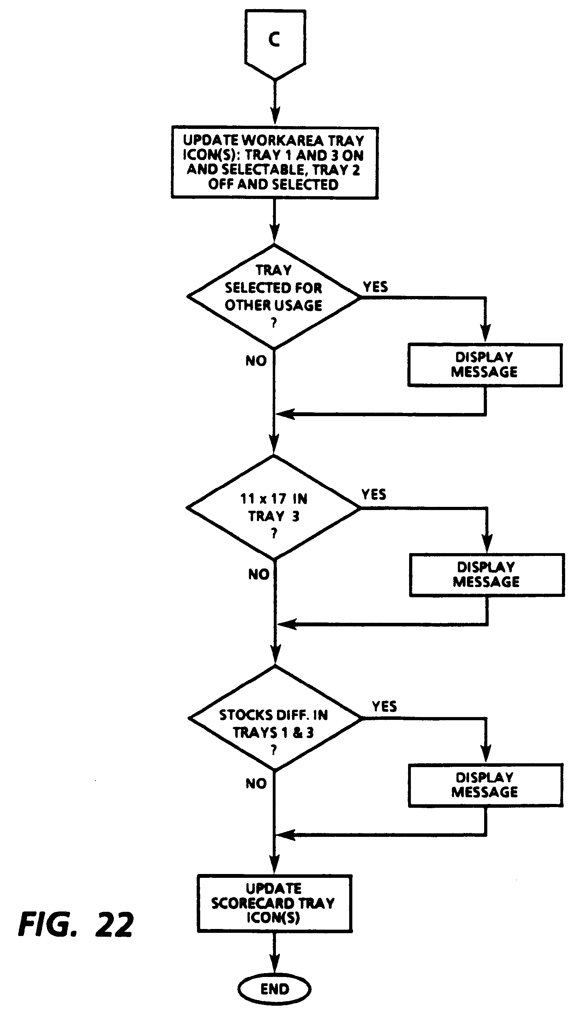

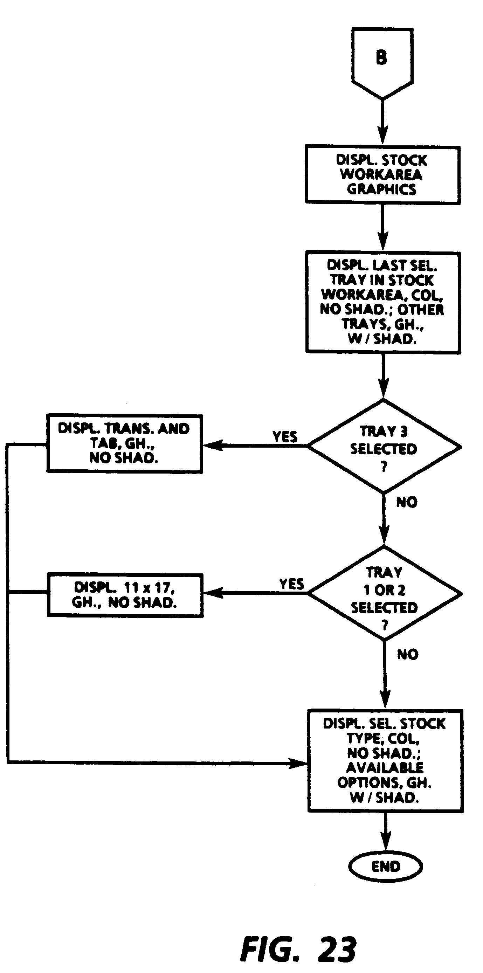

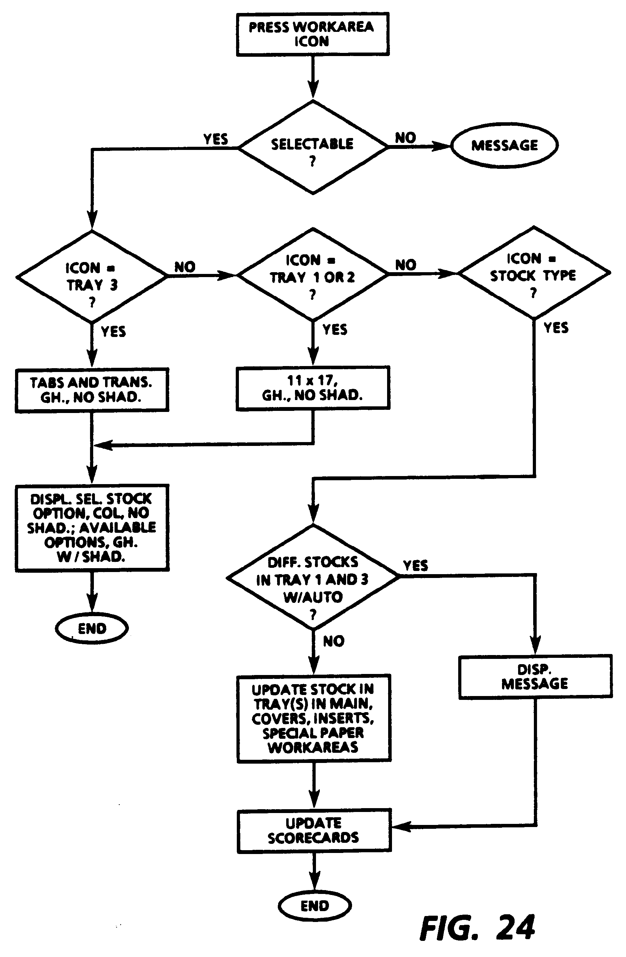

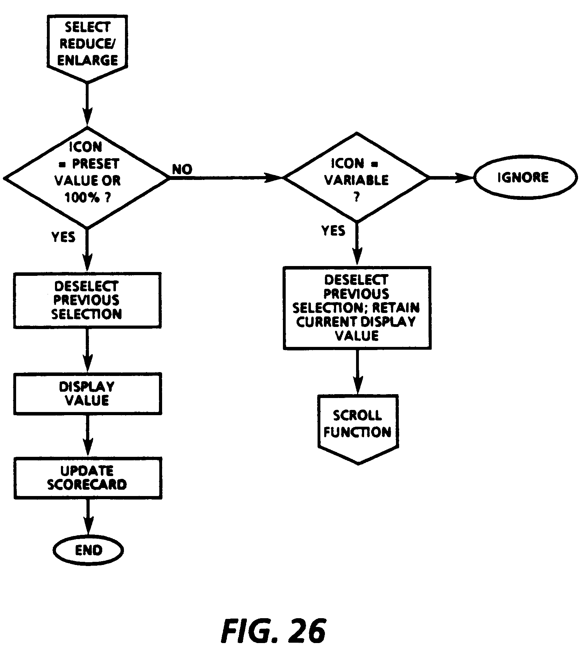

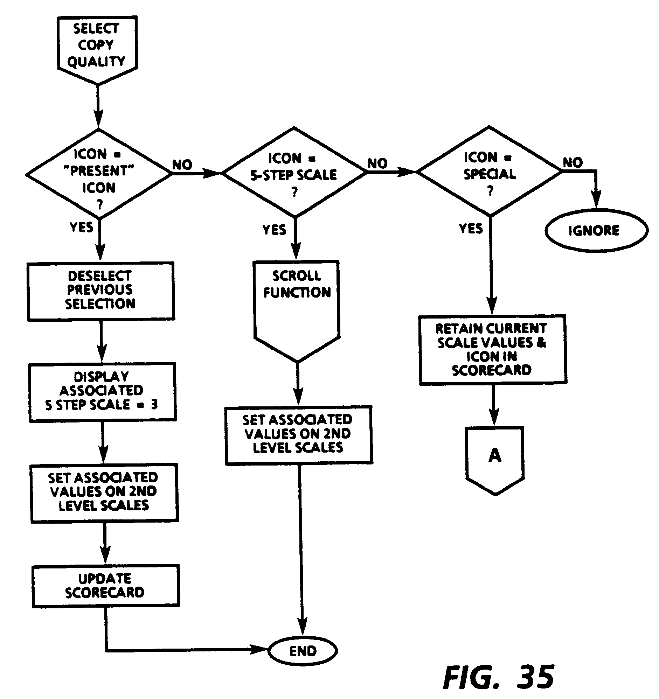

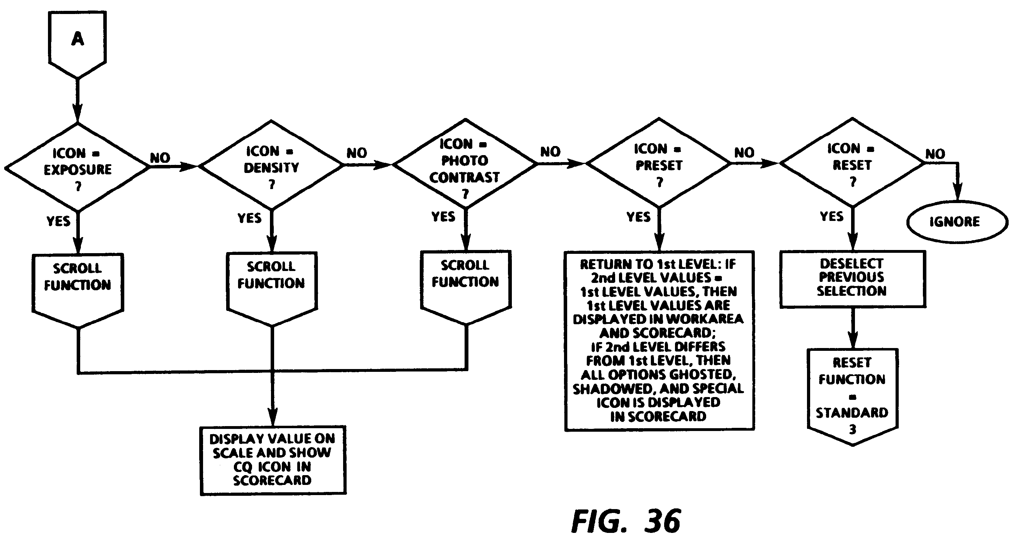

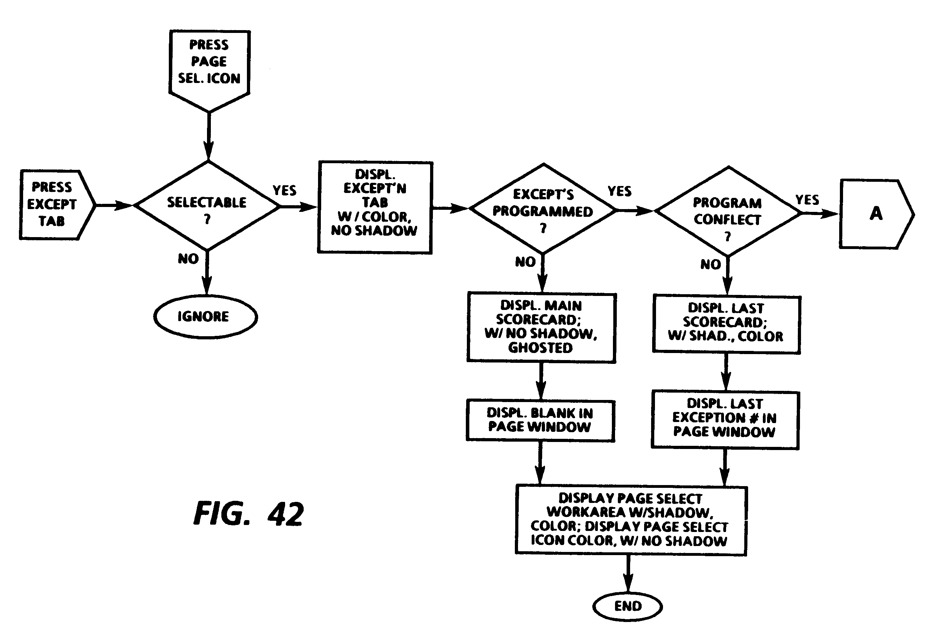

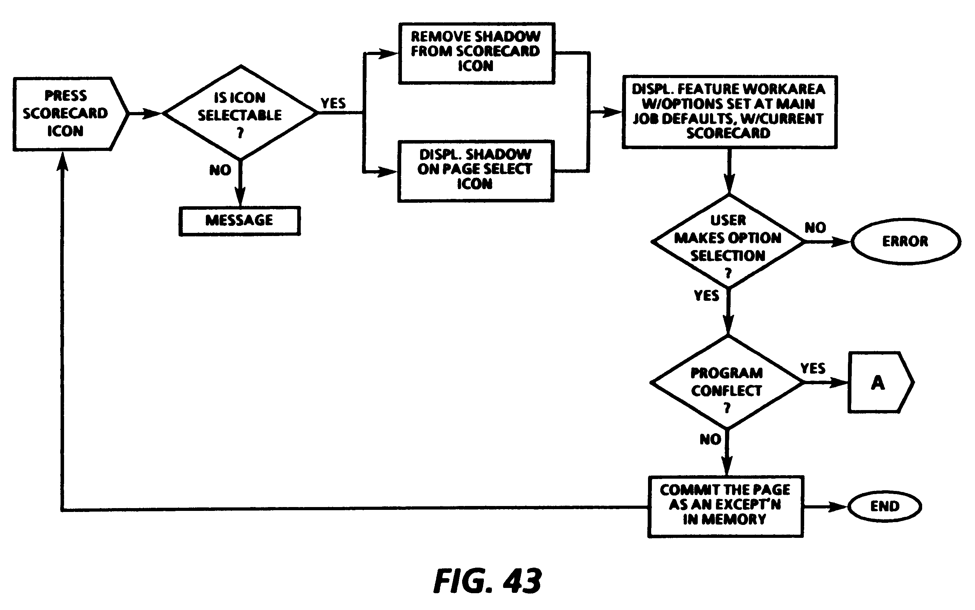

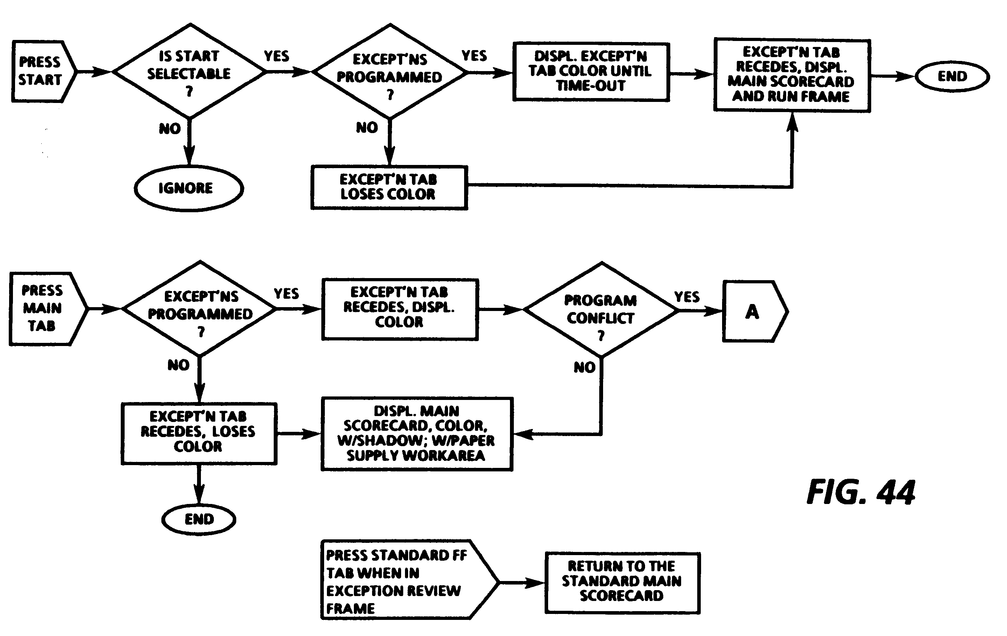

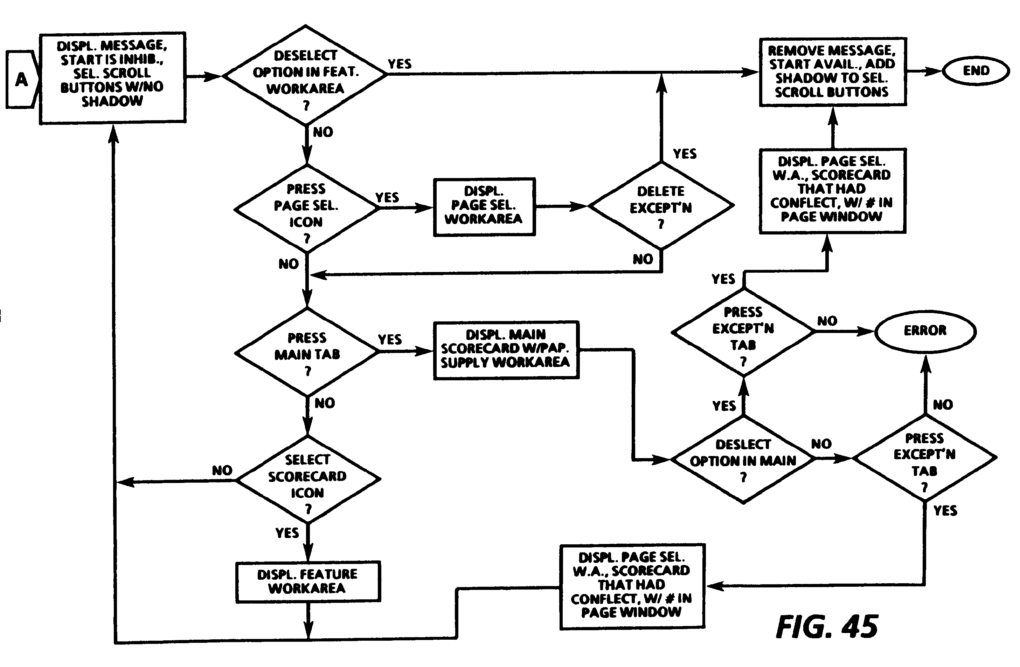

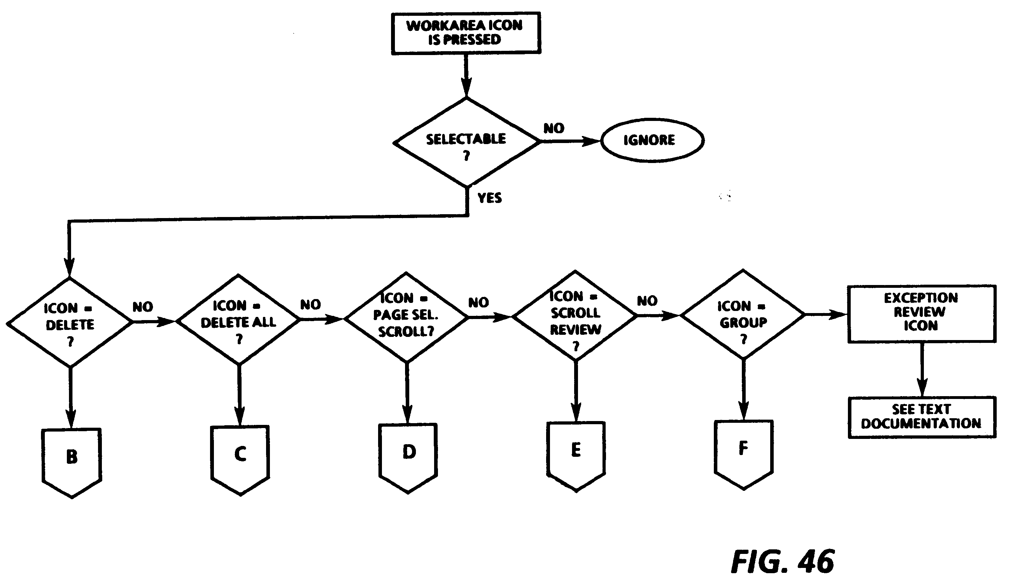

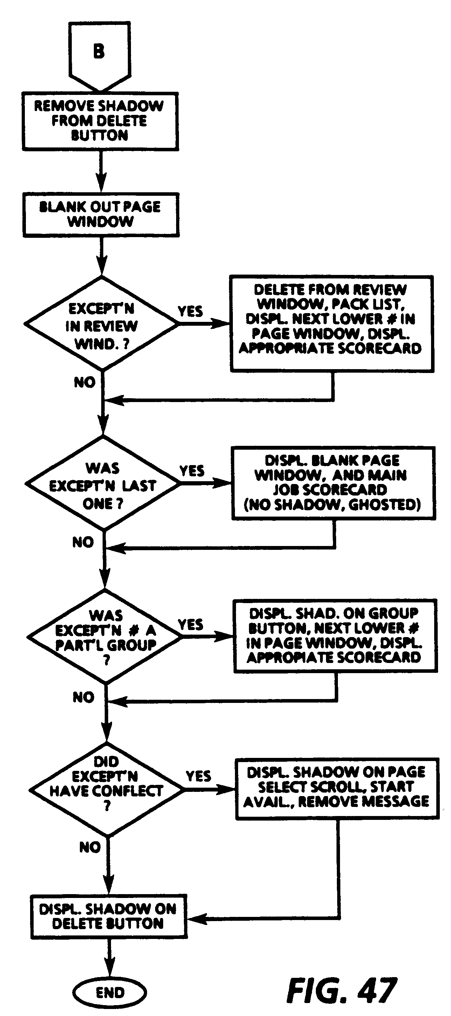

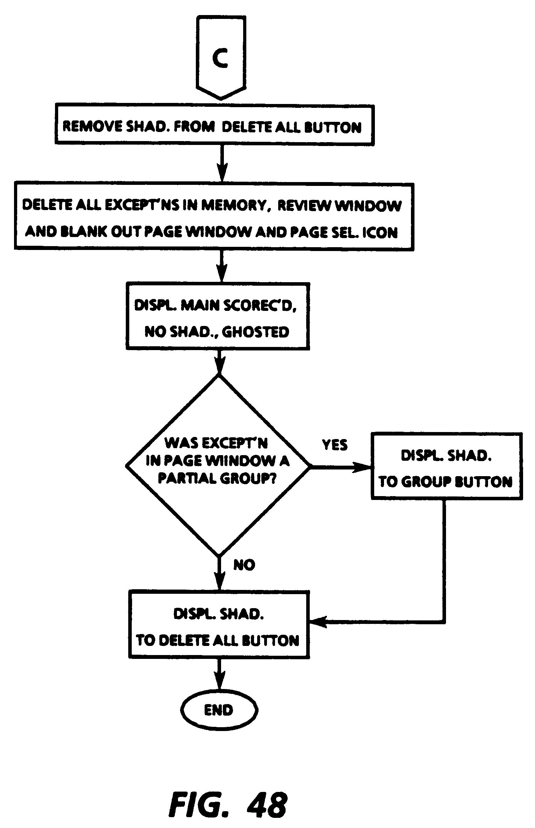

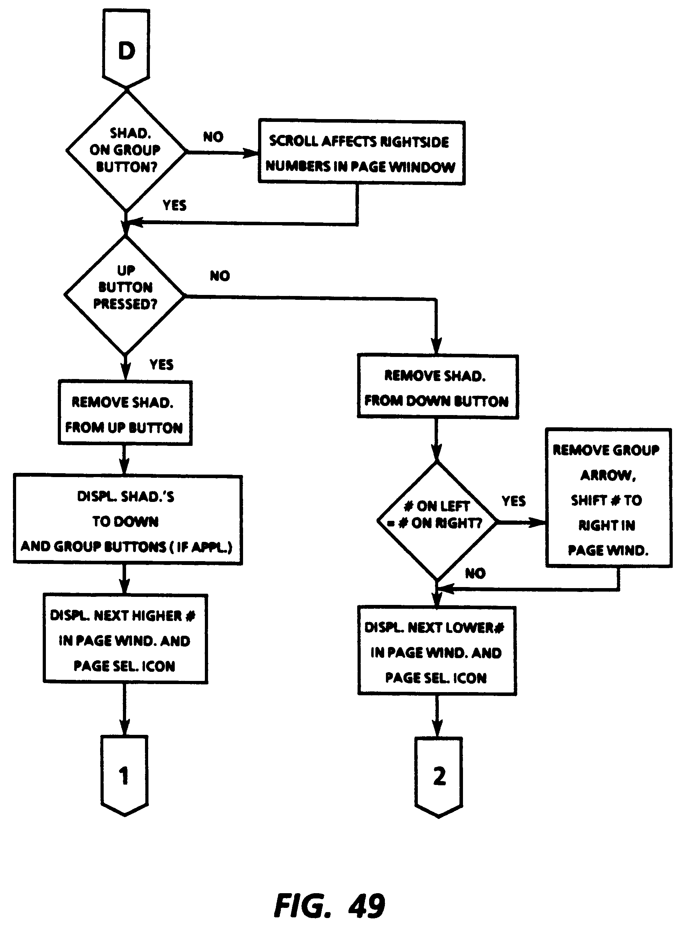

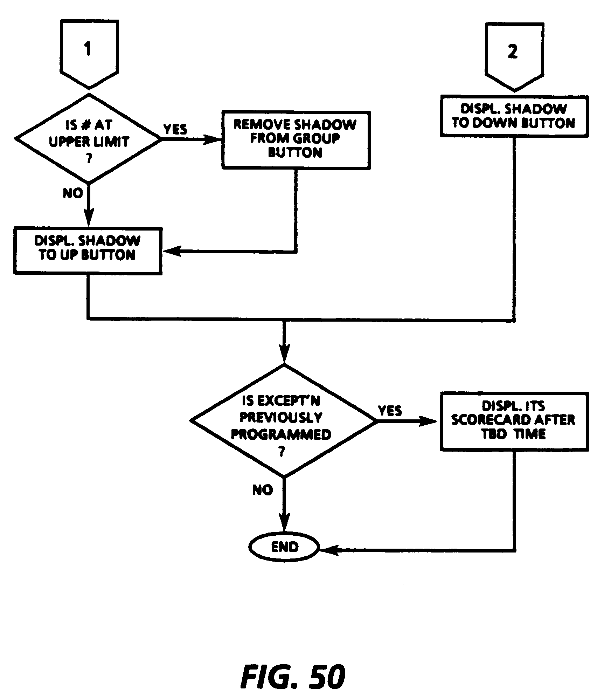

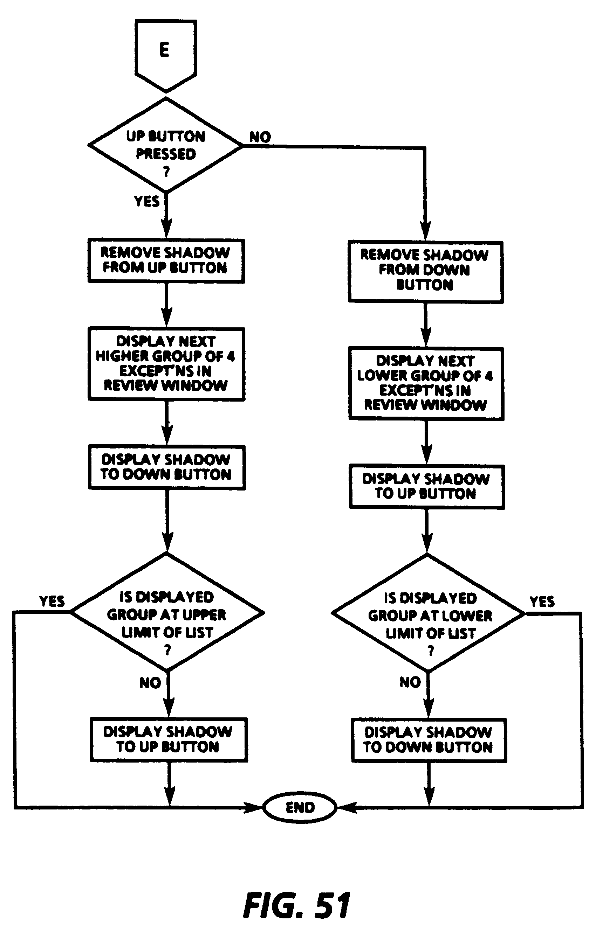

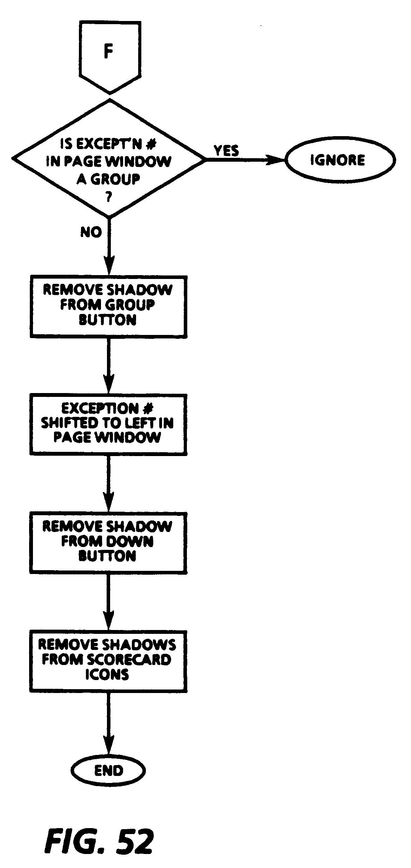

Referring now to Figures 17-52, selecting the STANDARD dialogue pathway file folder displays the PROGRAM scorecard 270 with the following selections (i.e., first level program selections) for the machine operator.

MAIN PAPER icon 302: (Figures 17-23): selection of this icon in the "Job Complete" case displays, in work selection area 240, icons 406, 408, 410, and 412 representing the machine paper trays 74 (#1), 78 (#2), and 82 (#3), and "Auto Switch"(i.e. Trays 1 and 3). By selecting one of the tray icons, the operator chooses the tray from which paper will be fed for the main body of the job. Selections in the "Job Incomplete" and "Print" cases are the same.

Additionally, various paper stocks may be displayed in work selection area 240 through actuation of a STOCK BUTTON icon (not shown). In the example shown in Figure 17, the stock types that are displayed are "standard" (icon 422), "drilled" (icon 424), "transparent" (icon 426), 8.7 to 9 inches (icon 428), "tabs" (icon 430), "11 x 17" (icon 431), and "odd" (icon 432). The stock type selection applies to the paper tray icon 406, 408, or 410 that is currently displayed in full color. The "Job Incomplete" case is the same while the "Print" case" is limited to changing the stock for trays not in use.

FRONT COVER icon 304: selection of this icon in the "Job Complete" case displays the paper tray icons 408 and 410 in work selection area 240 to allow the operator to select the paper tray (i.e., #2, or 3) from which the stock will be fed for the Front Cover. Selection of paper tray #1 is inhibited. The operator can also specify the number of sides of the cover to be imaged by selecting SIDES IMAGED icon 310. This selection is unavailable during the "Job Incomplete" and "Print" cases.

BACK COVER icon 306: selection of this icon is the same as that of the FRONT COVER icon described above.

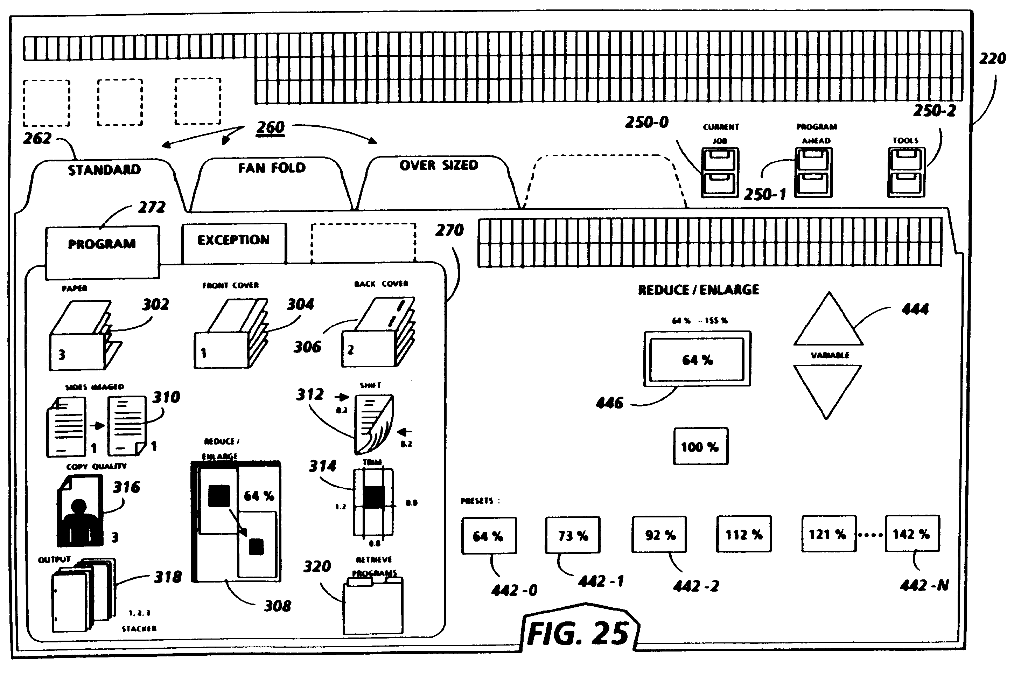

REDUCE/ENLARGE icon 308: (Figures 25-27): selection of this icon in the "Job Complete" case displays, in work selection area 240, a series of PRESET buttons 442-0, 442-1, 442-2,...442-n (representing preset reductions or enlargements), and VARIABLE control 444 (permitting variable size selection). The reduction selected will be reflected as a percentage in a display window 446. The operator can use VARIABLE control 444 to alter a selected PRESET value, pressing VARIABLE control 444 de-selecting the PRESET button that has been selected. This selection is the same in the "Job Incomplete" case and unavailable in the "Print" case.

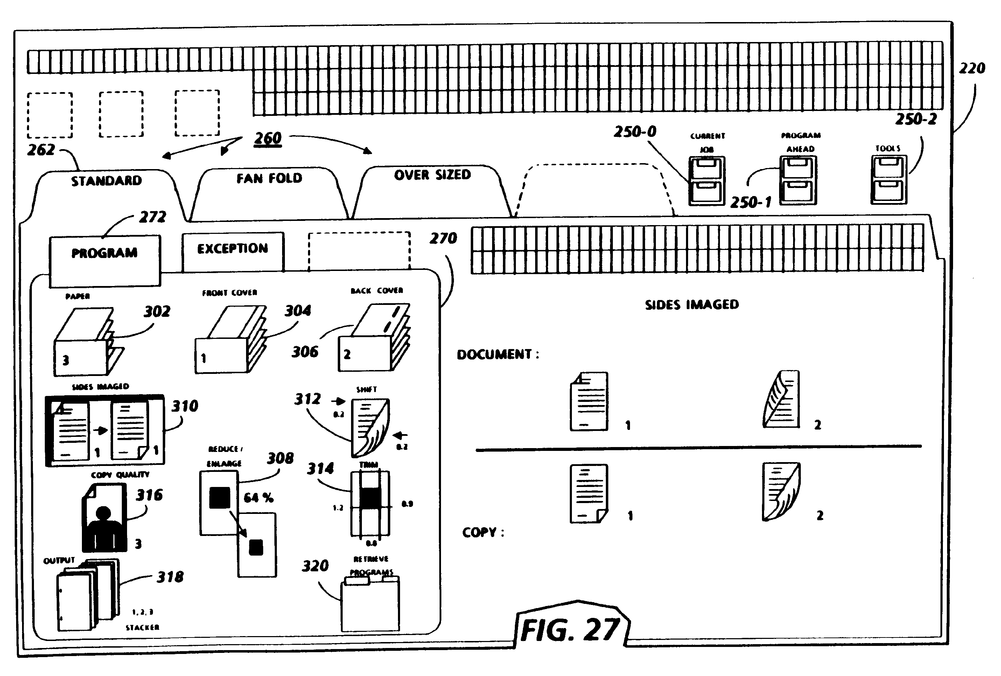

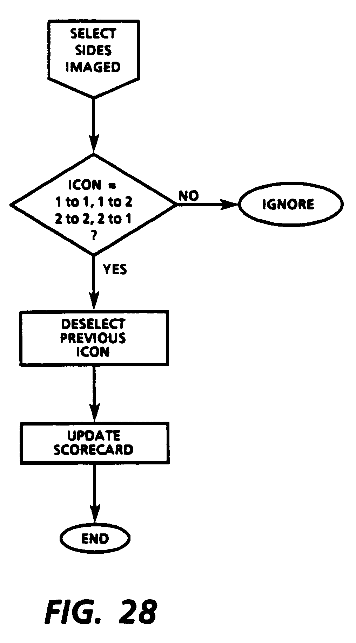

SIDES IMAGED icon 310: (Figures 27, 28): selection of this icon in the "Job Complete" case displays various side imaging options available in the form of 1 sided or 2 sided (DOCUMENT) and 1 sided or 2 sided (COPY). These icons allow the operator to select 1 or 2 sided copies. This selection is unavailable in either the "Job Incomplete" or "Print" cases.

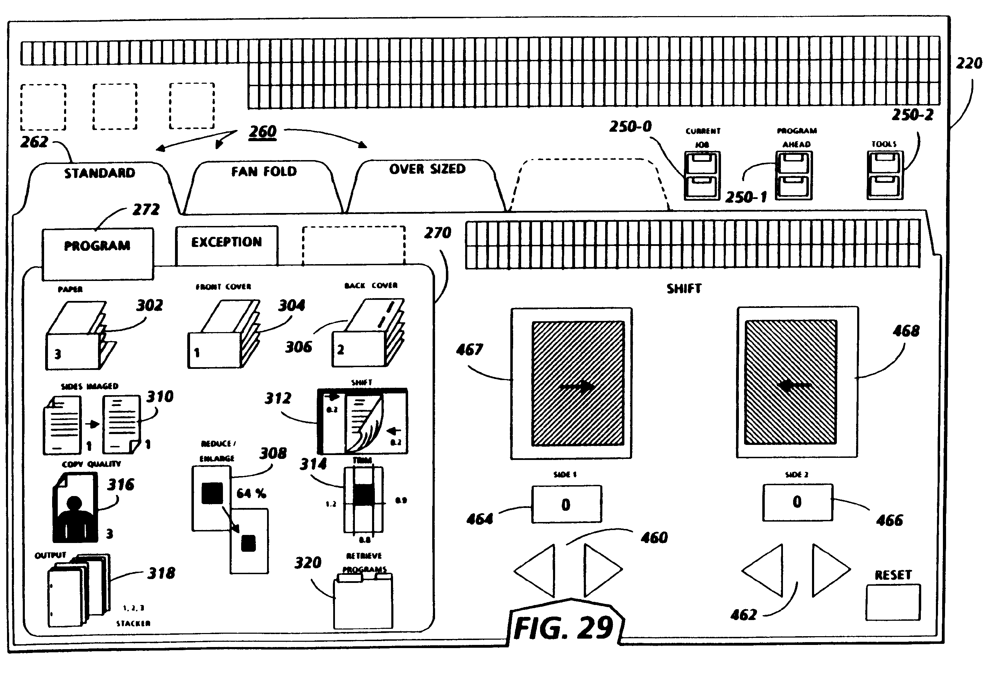

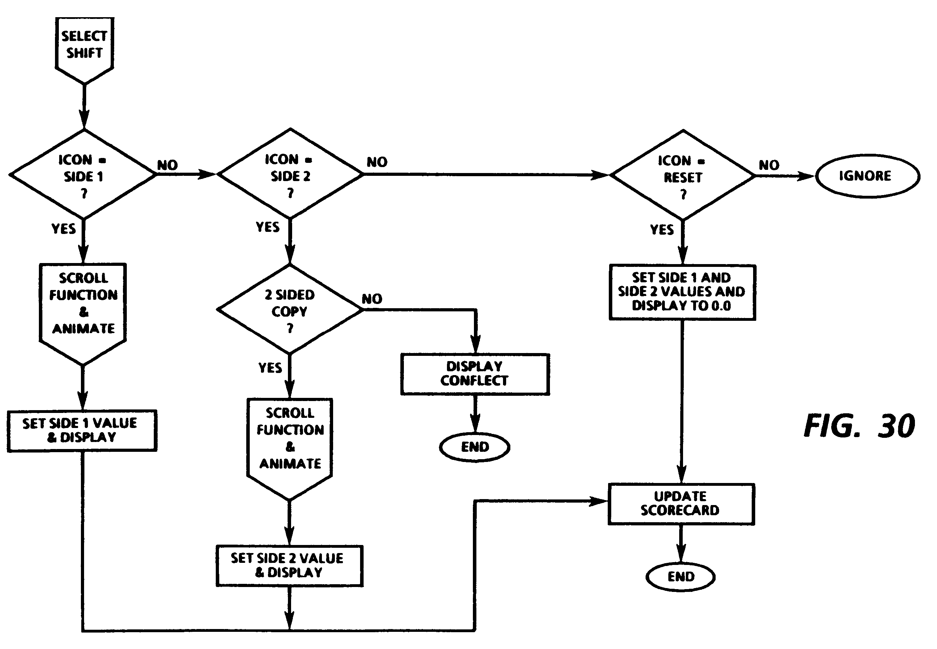

SHIFT icon 312: (Figures 29, 30): selection of this icon in the "Job Complete" case displays the various image shift options available to the operator for 1-sided and/or 2-sided copies in the work selection area 240. Bi-directional scroll functions 460, 462 are displayed for side 1 and/or side 2 shift, with windows 464, 466 for displaying the actual amount by which the image is shifted. Animated picture displays 467, 468 show the relative direction and amount of shift. This selection is the same in the "Job Incomplete" case and unavailable in the "Print" case.

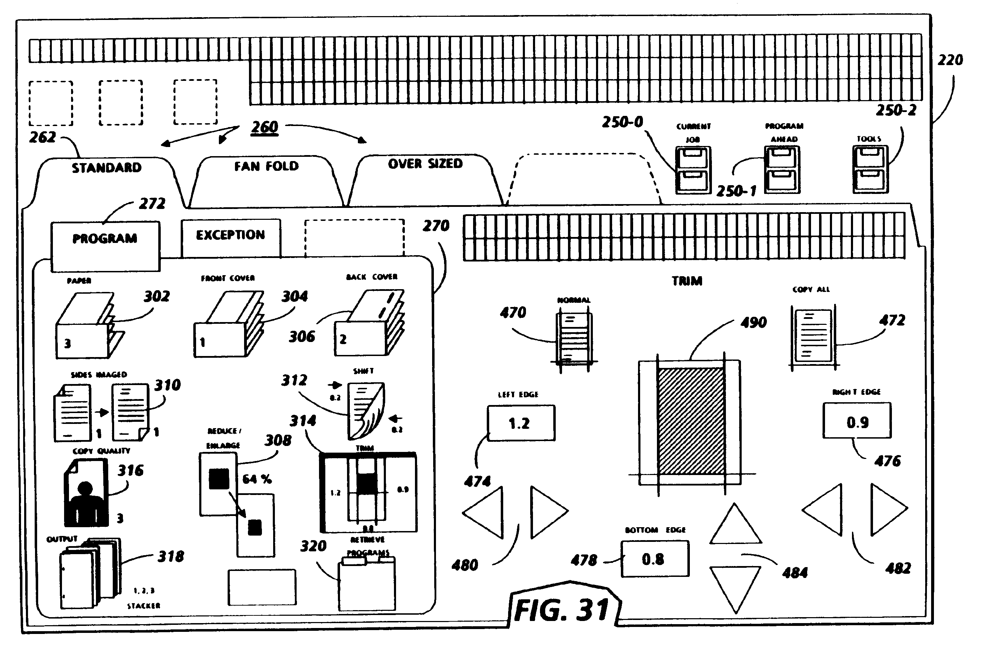

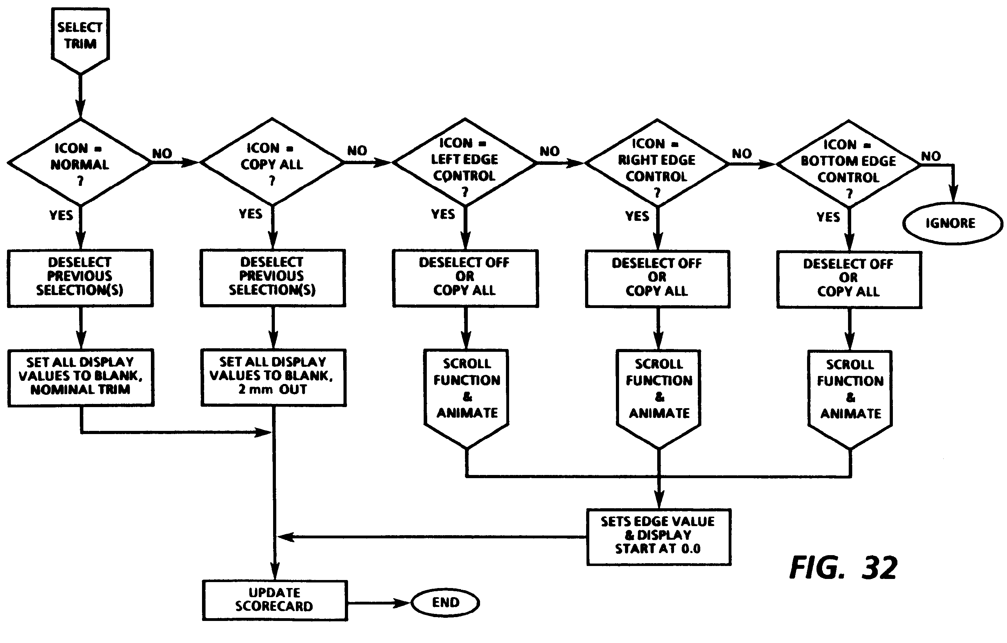

TRIM icon 314: (Figures 31, 32): selection of this icon in the "Job Complete" case displays the image trimming options available to the operator in work selection area 240. These include NORMAL and COPY ALL icons 470, 472 respectively, together with LEFT EDGE, RIGHT EDGE, and BOTTOM EDGE displays 474, 476, 478 respectively for displaying the amount of the trim. LEFT, RIGHT, and BOTTOM bi-directional scrolling controls 480, 482, 484 respectively are provided to effect the trimming operation, with an animated picture 490 to indicate the relative direction and amount of trim. This selection is the same in the "Job Incomplete" and unavailable in the "Print" case.

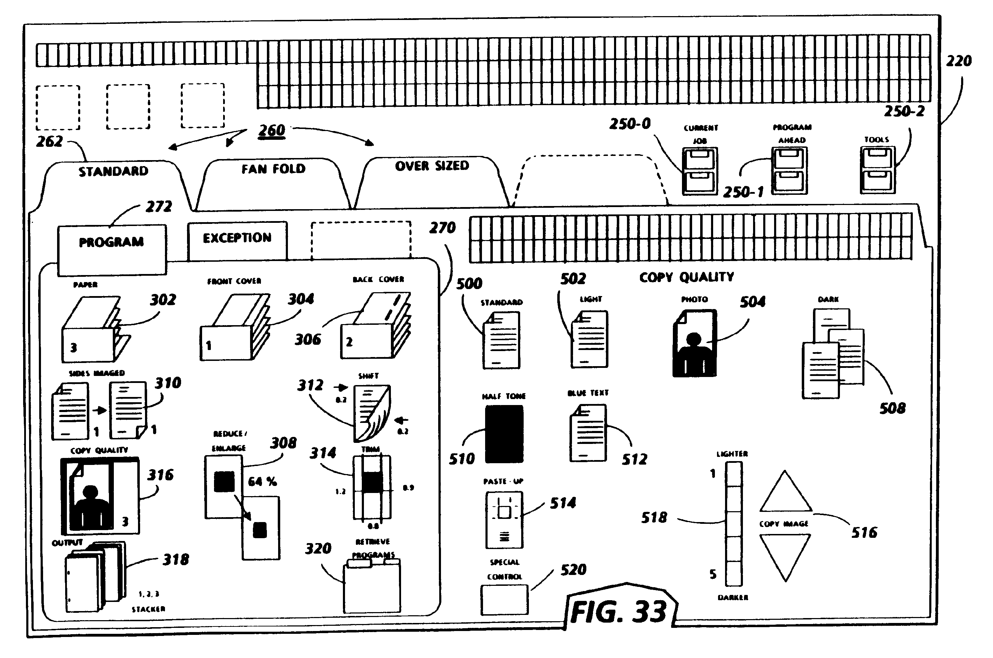

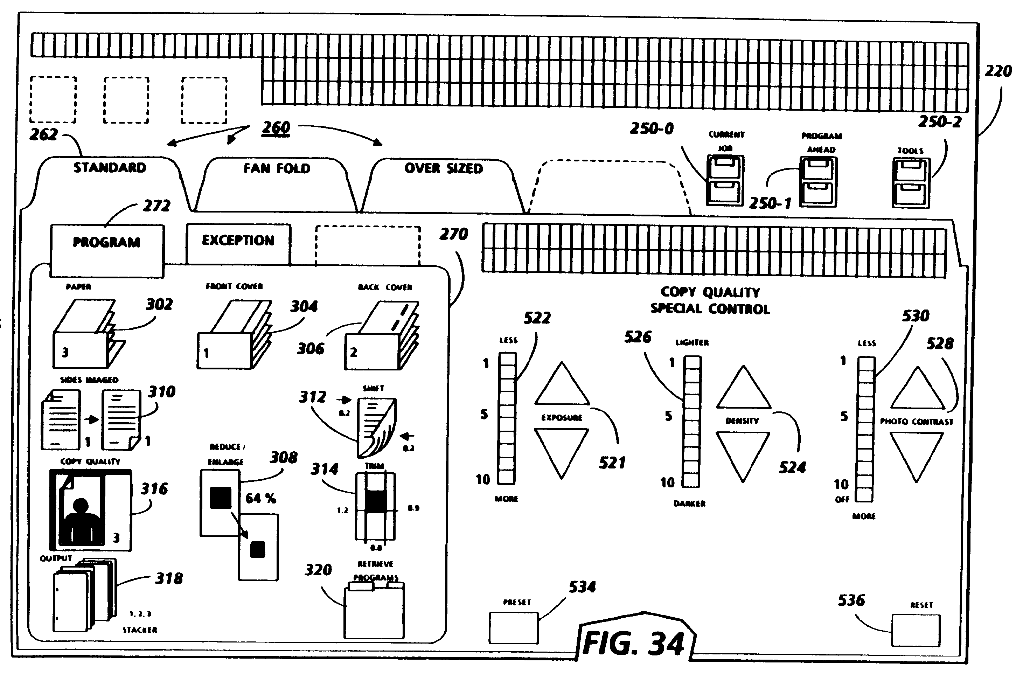

COPY QUALITY icon 316: (Figures 33-36): selection of this icon in the "Job Complete" case displays a series of preset values in the form of images, identified here as STANDARD (icon 500), LIGHT (icon 502), PHOTO (icon 504), DARK (icon 508), HALFTONE (icon 510), BLUE TEXT (icon 512), and PASTE UP (icon 514). An exposure control 516 (COPY IMAGE) with associated scale representation 518 and SPECIAL CONTROL button 520 are also shown to allow adjustments by the operator. Actuation of the SPECIAL CONTROL button 520 displays in work selection area 240 special copy controls (Figure 34) in the form of COPY LINES control 521 with an associated scale 522, a COPY SOLIDS control 524 with an associated scale 526, and a PHOTO-:COPY TONES control 528 with an associated scale 530 together with PRESET and RESET buttons 534, 536 respectively. Buttons 534, 536 display currently selected values and in cooperation with controls 521, 524, 528 permit changes to be made by the operator to exposure, contrast, and photo contrast. This selection is the same in both the "Job Incomplete" and "Print" cases.

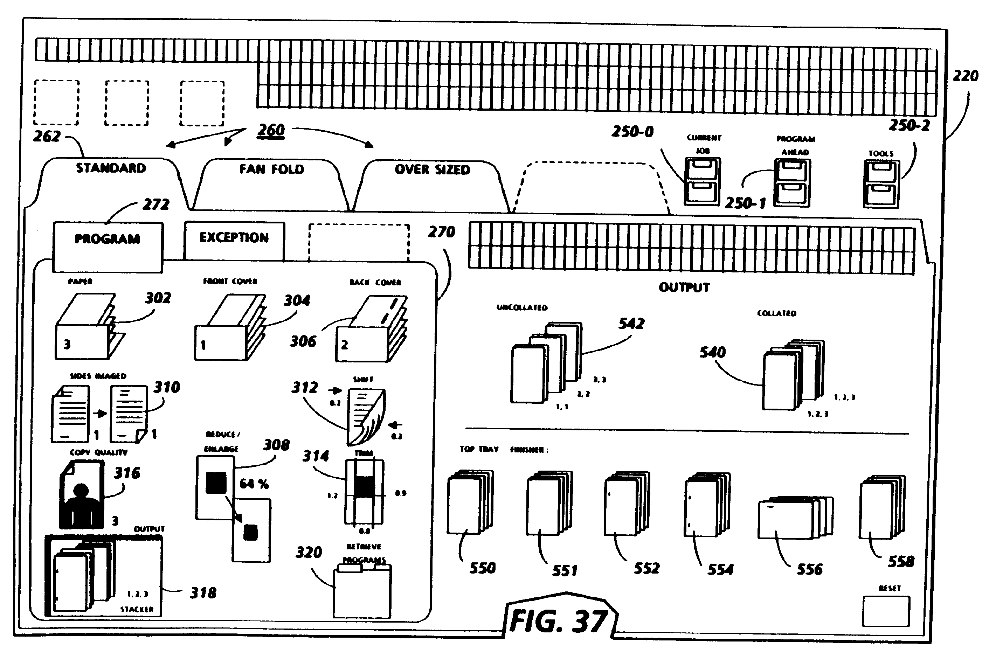

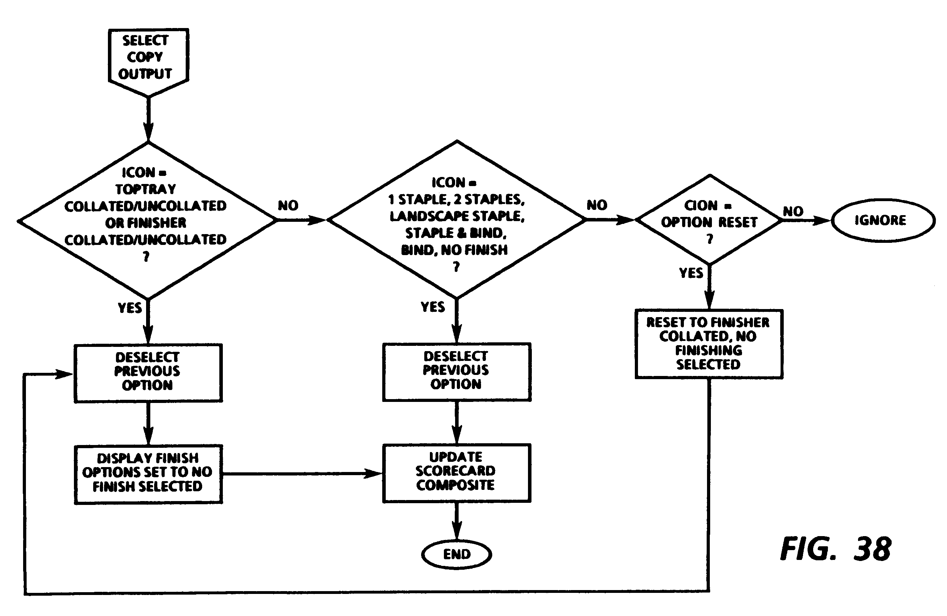

OUTPUT icon 318: (Figures 37, 38): selection of this icon in the "Job Complete" case divides the work selection area 240 into COLLATED/UNCOLLATED and TOP TRAY/FINISHER areas. In the COLLATED/UNCOLLATED area, there is displayed stacker collated and un-collated icons 540, 542. In the TOP TRAY/FINISHER area, there are various finishing options, illustrated here by icon 550 representing "top tray", and icon 551 representing "no finish", 552 representing "1 staple", icon 554 representing "2 staples", icon 556 representing "landscape staple", and icon 558 representing "bind". This selection is the same in the "Job Incomplete" case and unavailable in the "Print case".

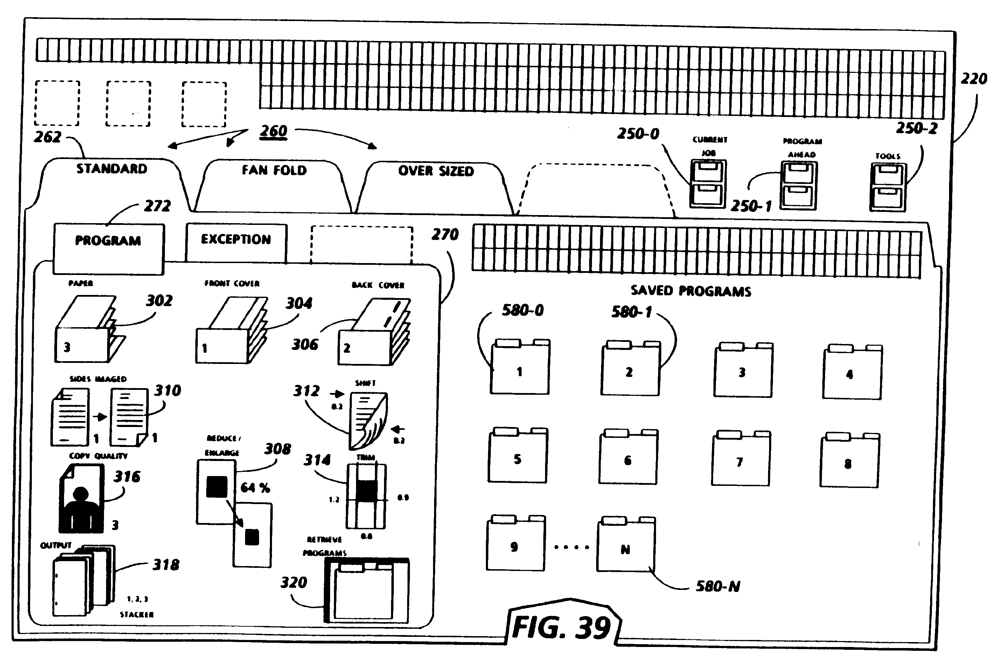

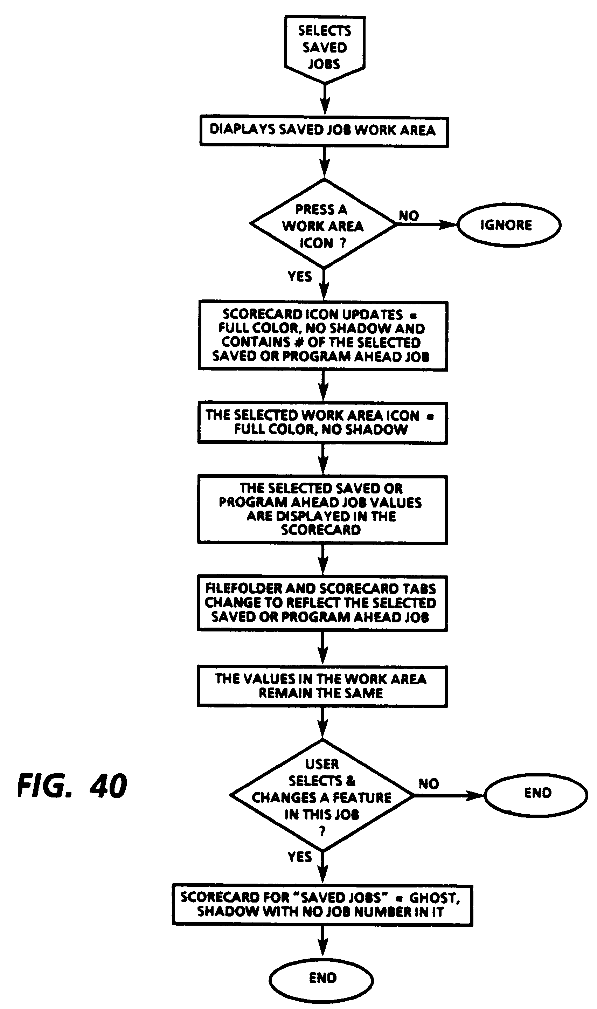

RETRIEVED PROGRAMS icon 320: (Figures 39, 40: selection of this icon in the "Job Complete" case provides the operator with the method to return previously Saved Programs to the scorecard to be reviewed or modified. On selection of icon 320, the current program values remain on the scorecard and plural icons 580-1, 580-1, 580-2,...580-n are displayed. When one of the icons 580-1, 580-1, 580-2,...580-n is pressed, the last job saved in the selected icon enters the scorecard, displaying the last file folder tab/scorecard tab programmed while icon 320 displays the selected icon number. Programming previously in the scorecard is lost if not a SAVED PROGRAM. The copy quantity keyboard 230 (Figure 5) is used to adjust previous selections made in the Saved Program. This selection is unavailable in the "Job Incomplete" and "Print" cases.

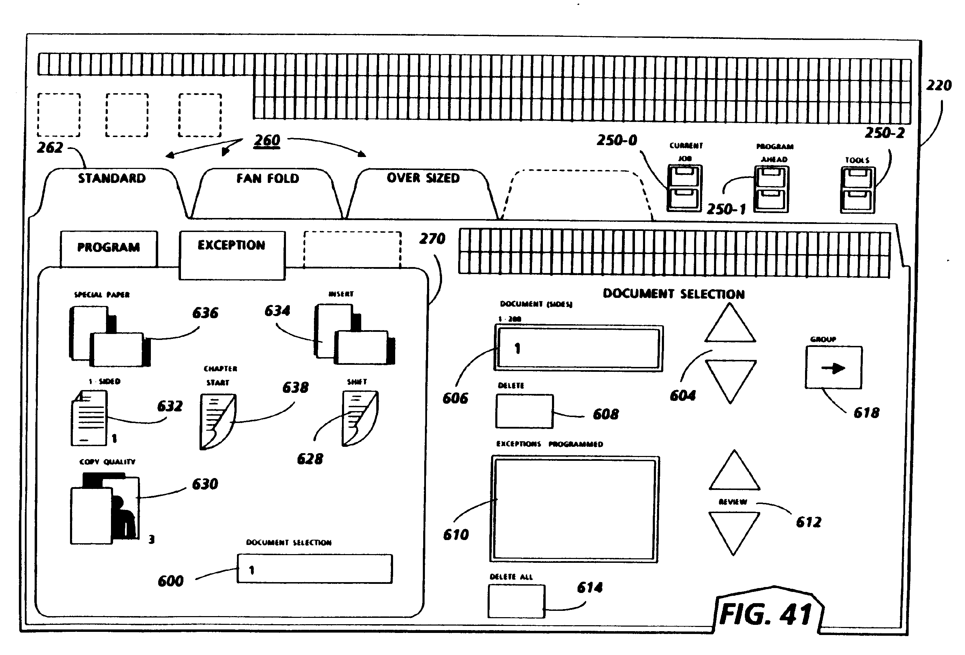

Referring to Figures 41-52, a second scorecard 270 tabbed EXCEPTION is also included with the STANDARD dialogue pathway file folder 260. This scorecard permits unique programming, referred to herein as exception programming, for individual pages or groups of pages within a job. The Exception Programming features are accessed by pressing the EXCEPTION tab which causes both the EXCEPTION scorecard to appear in the features selection area 238 of screen 222 and a Document Selection Work Area to appear in work selection area 240. (This work area also appears if the DOCUMENT SELECTION Icon 600 on the EXCEPTION scorecard is pressed while in a Feature work area).

The Document Selection work area provides the following displays:

Document Selection Scroll Buttons 604: these allow the operator to select a desired page number, the selected page number being shown in DOCUMENT (SIDE) Window 606.

DELETE Button 608: permits the operator to delete the selected page number.

DELETE ALL Button 614: permits the operator to delete all exception pages.

REVIEW SCROLL Buttons 612: permits the operator to review pages in the EXCEPTIONS PROGRAMMED window 610 or to review the programming of all the documents which contain exceptions. The operator can also scroll through a wrap-around list of pages with associated sides, which in duplex will wrap from 1 up to the maximum number of pages including all side 2's that can be accomplished by the machine document handler 26. When in simplex, only side 1's are displayed.

GROUP Button 618: permits the operator, after a page number is entered, to expand to a group of pages. When button 618 is pressed, an arrow appears in page window 606 and the scroll buttons 604 now act upon numbers in the right side of the window.

The EXCEPTION programming scorecard displays the following programming selections to the operator:

DOCUMENT SELECTION icon 600: selection of this icon in the "Job Complete" case provides the operator with access to the Document Selection workarea and displays the number of the page currently being displayed in the scorecard. This icon is unavailable in the "Job Incomplete" and "Print" cases.

SHIFT icon 628: same as SHIFT icon 312 in the PROGRAM scorecard.

COPY QUALITY icon 630: same as COPY QUALITY icon 316 in the PROGRAM scorecard. This icon is unavailable in the "Job Incomplete" and "Print" cases.

1 SIDED icon 632: functions in a similar manner as the SIDES IMAGED icon 310 in the PROGRAM scorecard. This icon is unavailable in the "Job Incomplete" and "Print" cases.

INSERT icon 634: allows the operator to select the tray from which inserts will be fed (NON IMAGED).

SPECIAL PAPER icon 636: allows the user to select the tray from which the paper will be fed for copying. This icon is unavailable in the "Job Incomplete" and "Print" cases.

CHAPTER START icon 638: allows the operator to designate that the beginning of a chapter in a 1:2 Sides-Imaged program should be printed face-up. This icon is unavailable in the "Job Incomplete" and "Print" cases.

On exit from an icon or scorecard or file folder, the last state of the exited item is retained in memory 115.

While the preceding description has described operation of U.I. 213 in the CURRENT JOB state entered by touching soft touch button 250-0 on screen 220, it will be understood that other suitable dialogue pathway file folders with scorecards may be displayed on screen 222 by entering one of the PROGRAM AHEAD, TOOLS, FAULTS, or INFORMATION states. These states are entered by touching of touch button 250-1 (PROGRAM AHEAD) or button 250-2 (TOOLS), or in the event a fault occurs (FAULT), or be pressing hard button "i" (INFORMATION) on bezel 218.

While the invention has been described with reference to the structure disclosed, it is not confined to the details set forth, but is intended to cover such modifications or changes as may come within the scope of the following claims.

## Claims

1. A reproduction machine having plural interactive sub-systems cooperable to produce copies from document originals, including:
   a) a screen (220) providing a display of programming selections for programming said machine;
   b) touch responsive means (226) associated with the screen to enable programming selections touched to be identified;

c) memory means (115) for retaining said programming selections for use in operating said machine;

d) control means (114) for operating said machine in response to the selected program; and

e) means for producing on the screen a display wherein said display depicts a primary card file composed of plural primary file cards (260), each of said primary file cards when selected by being touched causing the depiction of a secondary card file composed of additional, secondary, file cards (270) and of an adjoining area (240) of the display for use in making touch programming selections using the secondary file card selected, wherein the touch responsive means are arranged such that each of said primary and secondary file cards have an identifying tab (262, 272) which when touched selects that file card for display.

2. The reproduction machine according to claim 1 including means for displaying the file card associated with a touched tab while automatically closing the file card currently displayed.

3. The reproduction machine according to claim 1 or claim 2 wherein the screen includes plural touch-selectable areas (234) for selecting different primary file card combinations.

4. The reproduction machine according to any one of claims 1 to 3 in which the touch responsive means are arranged such that said file card identifying tabs (262, 272) are offset from one another to enable data contained in said tabs to be continuously displayed.

## Patentansprüche

1. Reproduktions-Maschine mit einer Vielzahl von interaktiven Teilsystemen, die zur Erzeugung von Kopien von Dokumenten-Originalen zusammenwirkend einsetzbar sind, wobei die Maschine enthält:

a) einen Bildschirm (220), der eine Anzeige von Programmierauswahlen zum Programmieren der Maschine schafft;

b) auf Berührung ansprechende Mittel (226), die dem Bildschirm zugeordnet sind zur Ermöglichung der Identifizierung von angetasteten Programmierauswahlen;

c) Speichermittel (115) zum Zurückhalten der Programmierauswahlen zur Verwendung beim Betrieb der Maschine;

d) Steuermittel (114) zum Betreiben der Maschine in Abhängigkeit von dem angewählten Programm; und

e) Mittel zum Erzeugen einer Anzeige an dem Bildschirm, wobei die Anzeige eine aus einer Vielzahl von Primär-Dateikarten (260) zusammengesetzte Primärkartendatei abbildet, von denen jede Primär-Dateikarte, wenn sie durch Antasten ausgewählt ist, die Abbildung einer aus zusätzlichen Sekundär-Dateikarten (270) zusammengesetzten Sekundärkarten-Datei und eines benachbarten Bereichs (240) der Anzeige herbeiführt zur Verwendung bei der Herstellung von Tast-Programmierauswahlen unter Benutzung der ausgewählten Sekundär-Dateikarte, wobei die auf Antasten reagierenden Mittel so angeordnet sind, daß jede Primär- und Sekundär-Dateikarte eine Identifizierungsfahne (262, 272) enthält, die, wenn sie angetastet wird, die Dateikarte zur Anzeige auswählt.

2. Reproduktions-Maschine nach Anspruch 1, welche Mittel enthält zum Anzeigen der einer angetasteten Fahne zugeordneten Dateikarte unter automatischem Schließen der gegenwärtig angezeigten Dateikarte.

3. Reproduktions-Maschine nach Anspruch 1 oder 2, bei der der Bildschirm eine Vielzahl von durch Tasten anwählbaren Bereichen (234) enthält zum Anwählen unterschiedlicher Primärdateikarten-Kombinationen.

4. Reproduktions-Maschine nach einem der Ansprüche 1 bis 3, bei der die auf Tasten ansprechende Mittel so angeordnet sind, daß die Dateikarten-Identifizierungsfahnen (262, 272) gegeneinander versetzt sind, um die kontinuierliche Anzeige von in den Fahnen enthaltenen Daten zu ermöglichen.

## Revendications

1. Machine à reproduire comportant de nombreux sous-systèmes interactifs pouvant coopérer afin de produire des copies à partir de documents d'origine, comportant :

a) un écran (220) assurant un affichage de sélections de programmation pour programmer ladite machine,

b) des moyens sensibles au toucher (226) associés à l'écran pour valider les sélections de programmation touchées pour être identifiées,

c) un moyen de mémoire (115) pour conserver lesdites sélections de programmation pour utilisation dans le fonctionnement de ladite machine,

d) un moyen de commande (114) pour faire fonctionner ladite machine en réponse au programme sélectionné, et

e) un moyen pour produire sur l'écran un affichage dans lequel ledit affichage montre un fichier de cartes primaires constitué de nombreuses cartes de fichier primaires (260), chacune desdites cartes de fichier primaires lorsque sélectionnée en étant touchée entraînant l'affichage d'un fichier de cartes secondaire constitué de cartes de fichier secondaires supplémentaires (270) et d'une zone contiguë (240) de l'affichage pour utilisation en touchant les sélections de programmation en utilisant la carte de fichier secondaire sélectionnée, dans laquelle les moyens sensibles au toucher sont disposés de sorte que chacune desdites cartes de fichier primaires et secondaires comporte une étiquette d'identification (262, 272) qui lorsque touchée sélectionne cette carte de fichier pour affichage.

2.  Machine à reproduire selon la revendication 1, comportant un moyen pour afficher la carte de fichier associée à une étiquette touchée tout en fermant automatiquement la carte de fichier actuellement affichée.

3.  Machine à reproduire selon la revendication 1 ou la revendication 2 dans laquelle l'écran comporte de nombreuses zones sélectionnables au toucher (234) pour sélectionner différentes combinaisons de cartes de fichier primaires.

4.  Machine à reproduire selon l'une quelconque des revendications 1 à 3, dans laquelle les moyens sensibles au toucher sont disposés de sorte que lesdites étiquettes d'identification de carte de fichier (262, 272) sont mutuellement décalées pour permettre aux données contenues dans lesdites étiquettes d'être continuellement affichées.

**FIG. 1**

EP 0 331 329 B1

FIG. 2

**5**

**114**

**213**

| MACHINE | ←→ | CONTROLLER | ←→ | U. I. |

**MEMORY**

**115**

# FIG. 3

**FIG. 4**

**FIG. 5**

**FIG. 6**

EP 0 331 329 B1

FIG. 7

EP 0 331 329 B1

FIG. 8

EP 0 331 329 B1

A

ICON ←
NO SHADOW

ICON
SELECTED
?

ICON ←
COLOR FILL

ICON ←
OUTLINED

SAVE STATE
( FOR RESET )

ASSIGN
BITMAP ID

DIAPLAY
BITMAP

END

FIG. 9

**FIG. 10**

EP 0 331 329 B1

## FIG. 11

FINGER UP

ICON = FILE DRAWER ? — NO →

YES ↓

ASSIGN CURRENT STATE ICON SET

ICON = PROGRAM TAB ? — NO →

YES ↓

TAB ACTIVE ? — NO → END

YES ↓

MOVE TAB FORWARD

↓

ASSIGN DEFAULT SCORECARD

ICON = SCORECARD TAB ? — NO →

YES ↓

TAB ACTIVE ? — NO → END

YES ↓

BRING TAB TO FRONT

ICON = SCORECARD ICON ? — NO →

YES ↓

ICON ACTIVE ? — NO → END

YES ↓

DISPLAY COUNT

↓

ASSIGN CURRENT WORK AREA ICON SET

ICON = WORK AREA ICON ? — NO → ERROR

YES ↓

ICON ACTIVE ? — NO → END

YES ↓

DIAPLAY DEFAULT WORK AREA

↓

END

UPDATE SENSOR MAP

↓

END

C

UPDATE SENSOR MAP

↓

END

D

E

EP 0 331 329 B1

**FIG. 12**

EP 0 331 329 B1

```
        ┌───┐                              ┌───┐
        │ D │                              │ E │
        └─┬─┘                              └─┬─┘
          │                                  │
          ▼                                  ▼
  ┌───────────────┐                 ┌───────────────┐
  │  WORK AREA    │                 │    ASSIGN     │
  │  ICON(S)←     │                 │ SCORECARD TO  │
  │ SHADOW│NO     │                 │  WORK AREA    │
  │  COLOR        │                 │   ICON(S)     │
  └───────┬───────┘                 └───────┬───────┘
          │                                  │
          ▼                                  ▼
  ┌───────────────┐                 ┌───────────────┐
  │  WORK AREA    │                 │SCORECARD ICON │
  │  ICON(S)←     │                 │ ← OUTLINED│   │
  │OUTLINED│COLOR │                 │  COLOR FILL   │
  │   FULL        │                 └───────┬───────┘
  └───────┬───────┘                         │
          │                                  ▼
          ▼                         ┌───────────────┐
  ┌───────────────┐                 │ASSIGN DISPLAYER│
  │ASSIGN DISPLAYER│                │ IDS TO ICONS  │
  │ IDS TO ICONS  │                 └───────┬───────┘
  └───────┬───────┘                         │
          │                                  ▼
          ▼                         ┌───────────────┐
  ┌───────────────┐                 │   DISPLAY     │
  │   DISPLAY     │                 │   BITMAP      │
  │   BITMAP(S)   │                 └───────┬───────┘
  └───────┬───────┘                         │
          │                                  ▼
          ▼                              ( END )
       ( END )
```

# FIG. 13

25

```
                    ┌─────────────────┐
                    │   FINGER DOWN   │
                    └────────┬────────┘
                             │
                             ▼
                    ┌─────────────────┐
                    │   ICON ← NO     │
                    │     SHADOW      │
                    └────────┬────────┘
                             │
                             ▼
                         ╱───────╲
                        ╱  TOUCH  ╲        YES      ┌─────────────┐
                       ╱  ≥ 0.5 SEC ╲──────────────▶│   SCROLL    │
                       ╲     ?      ╱                │    RATE     │
                        ╲─────────╱                  └──────┬──────┘
                             │ NO                           │
                             ▼                              │
                    ┌─────────────────┐                     │
                    │   INCREMENT /   │                     │
                    │   DECREMANT     │                     │
                    │   = 1 UNIT      │                     │
                    └────────┬────────┘                     │
                             │                              │
                             ▼                              │
                    ┌─────────────────┐                     │
                    │ DISPLAY VALUE(S)│◀────────────────────┘
                    └────────┬────────┘
                             │
                             ▼
                    ┌─────────────────┐
                    │  END OF SCALE   │
                    │     = STOP      │
                    └────────┬────────┘
                             │
                             ▼
                         ╱───────╲
              YES       ╱ REMOVE  ╲
         ◀─────────────╱  FINGER   ╲
                       ╲     ?      ╱
                        ╲─────────╱
                             │ NO
                             ▼
                    ┌─────────────────┐
                    │ COLOR FILL BOTH │
                    │  UP AND DOWN    │
                    │     ICONS       │
                    └────────┬────────┘
                             │
                             ▼
                    ┌─────────────────┐
                    │    UPDATE       │
                    │   SCORECARD     │
                    └────────┬────────┘
                             │
                             ▼
                    ┌─────────────────┐      ┌─────────────────┐
                    │    RETURN       │──────│  EXCEPTION :    │
                    │    SHADOW       │      │ END OF SCALE =  │
                    └────────┬────────┘      │   NO SHADOW     │
                             │               └─────────────────┘
                             ▼
                          ╭──────╮
                          │  END │
                          ╰──────╯
```

*FIG. 14*

26

```
┌─────────────────┐
│  RESET ICON ←   │
│    COLORFILL    │
└─────────────────┘
         │
         ▼
┌─────────────────┐
│  WORKAREA ←     │
│ DEFAULT SETTING │
└─────────────────┘
         │
         ▼
┌─────────────────┐
│  SCORECARD ←    │
│ DEFAULT SETTING │
└─────────────────┘
         │
         ▼
┌─────────────────┐
│  RESET ICON ←   │
│    OUTLINE      │
└─────────────────┘
         │
         ▼
┌─────────────────┐
│  RESET ICON ←   │
│    SHADOW       │
└─────────────────┘
         │
         ▼
      ( END )
```

# FIG. 15

**FIG. 16**

FIG. 17

FIG. 18

PRESS MAIN ICON
IN SCORECARD

MESSAGE ← NO — SELECTABLE ?

YES

DISPLAY MAIN
TRAY WORKAREA
TRAY GRAPHICS

DISPLAY SELECTED
TRAY OR TRAYS
(i.e. AUTO) COL.,
NO SHAD.; DISPLAY
UNSELECTED TRAY
OR TRAYS, GH.,
W/SHAD.

DISPLAY STOCK
BUTTON,
GH.,W/SHAD.

END

*FIG. 19*

**FIG. 20**

A

DESELECT
PREVIOUS TRAY OR
AUTOSWITCH

DISPLAY
ASSOCIATED STOCK
IN TRAY

TRAY IS
SELECTED FOR
OTHER USAGE
?

YES → DISPLAY
CONFLECT

NO

AUTOSWITCH
SELECTED ?

YES → C

NO

UPDATE
SCORECARD

END

## FIG. 21

33

**FIG. 22**

34

FIG. 23

PRESS WORKAREA
ICON

SELECTABLE ?

YES → NO → MESSAGE

ICON = TRAY 3 ?
ICON = TRAY 1 OR 2 ?
ICON = STOCK TYPE ?

NO → NO →

YES → YES → YES

TABS AND TRANS.
GH., NO SHAD.

11 x 17,
GH., NO SHAD.

DISPL. SEL. STOCK
OPTION, COL, NO
SHAD.; AVAILABLE
OPTIONS, GH.
W / SHAD.

END

DIFF. STOCKS
IN TRAY 1 AND 3
W/AUTO ?

YES →

NO

UPDATE STOCK IN
TRAY(S) IN MAIN,
COVERS, INSERTS,
SPECIAL PAPER
WORKAREAS

DISP.
MESSAGE

UPDATE
SCORECARDS

END

**FIG. 24**

36

FIG. 25

EP 0 331 329 B1

SELECT
REDUCE/
ENLARGE

ICON
= PRESET
VALUE OR
100% ?

NO

ICON =
VARIABLE
?

IGNORE

YES

YES

DESELECT
PREVIOUS
SELECTION

DESELECT
PREVIOUS
SELECTION; RETAIN
CURRENT DISPLAY
VALUE

DISPLAY
VALUE

SCROLL
FUNCTION

UPDATE
SCORECARD

END

*FIG. 26*

FIG. 27

EP 0 331 329 B1

FIG. 28

FIG. 29

262 260 STANDARD FAN FOLD OVER SIZED 250-0 CURRENT JOB PROGRAM AHEAD TOOLS 250-2 250-1 220

272 PROGRAM EXCEPTION 270

PAPER 302 FRONT COVER 304 BACK COVER 306

SIDES IMAGED 310 SHIFT 312

COPY QUALITY 316 REDUCE/ENLARGE 308 64% TRIM 314

OUTPUT 318 RETRIEVE PROGRAMS 320 STACKER

SHIFT
467 468
SIDE 1 464 0 SIDE 2 0 466
460 462 RESET

EP 0 331 329 B1

*FIG. 30*

FIG. 31

EP 0 331 329 B1

SELECT TRIM

ICON = NORMAL ? — NO
YES ↓
DESELECT PREVIOUS SELECTION(S)
SET ALL DISPLAY VALUES TO BLANK, NOMINAL TRIM

ICON = COPY ALL ? — NO
YES ↓
DESELECT PREVIOUS SELECTION(S)
SET ALL DISPLAY VALUES TO BLANK, 2 mm OUT

ICON = LEFT EDGE CONTROL ? — NO
YES ↓
DESELECT OFF OR COPY ALL
SCROLL FUNCTION & ANIMATE

ICON = RIGHT EDGE CONTROL ? — NO
YES ↓
DESELECT OFF OR COPY ALL
SCROLL FUNCTION & ANIMATE

ICON = BOTTOM EDGE CONTROL ? — NO → IGNORE
YES ↓
DESELECT OFF OR COPY ALL
SCROLL FUNCTION & ANIMATE

SETS EDGE VALUE & DISPLAY START AT 0.0

UPDATE SCORECARD

END

FIG. 32

44

FIG. 33

FIG. 34

```
        ┌─────────┐
        │ SELECT  │
        │  COPY   │
        │ QUALITY │
        └────┬────┘
             │
             ▼
        ◇ ICON =        NO    ◇ ICON =        NO    ◇ ICON =        NO
        "PRESENT" ──────────► 5-STEP SCALE ─────────► SPECIAL ──────────┐
          ICON                    ?                      ?              │
            ?                                                           ▼
          YES                   YES                    YES          ( IGNORE )
           │                     │                      │
           ▼                     ▼                      ▼
      ┌─────────┐          ┌─────────┐          ┌──────────────┐
      │ DESELECT│          │ SCROLL  │          │RETAIN CURRENT│
      │ PREVIOUS│          │FUNCTION │          │ SCALE VALUES &│
      │SELECTION│          └────┬────┘          │   ICON IN     │
      └────┬────┘               │               │  SCORECARD   │
           │                    │               └──────┬───────┘
           ▼                    ▼                      │
      ┌─────────┐          ┌─────────┐                 ▼
      │ DISPLAY │          │SET ASSOCI│            ┌────────┐
      │ASSOCIATED│         │ATED VALUES│           │   A    │
      │5 STEP SCALE = 3│   │ON 2ND    │            └────────┘
      └────┬────┘          │LEVEL SCALES│
           │               └────┬─────┘
           ▼                    │
      ┌─────────┐               │
      │SET ASSOCI│              │
      │ATED VALUES│             │
      │ON 2ND    │              │
      │LEVEL SCALES│            │
      └────┬────┘               │
           │                    │
           ▼                    │
      ┌─────────┐               │
      │ UPDATE  │               │
      │SCORECARD│               │
      └────┬────┘               │
           │                    ▼
           └──────────────► ( END )
```

*FIG. 35*

FIG. 36

FIG. 37

```
        ┌─────────┐
        │ SELECT  │
        │  COPY   │
        │ OUTPUT  │
        └─────────┘
             │
             ▼
```

ICON = TOPTRAY COLLATED/UNCOLLATED OR FINISHER COLLATED/UNCOLLATED ? — NO → ICON = 1 STAPLE, 2 STAPLES, LANDSCAPE STAPLE, STAPLE & BIND, BIND, NO FINISH ? — NO → CION = OPTION RESET ? — NO → IGNORE

YES ↓ DESELECT PREVIOUS OPTION → DISPLAY FINISH OPTIONS SET TO NO FINISH SELECTED

YES ↓ DESELECT PREVIOUS OPTION → UPDATE SCORECARD COMPOSITE → END

YES ↓ RESET TO FINISHER COLLATED, NO FINISHING SELECTED

*FIG. 38*

FIG. 39

SELECTS SAVED JOBS

↓

DIAPLAYS SAVED JOB WORK AREA

↓

PRESS A WORK AREA ICON ? —NO→ IGNORE

YES ↓

SCORECARD ICON UPDATES = FULL COLOR, NO SHADOW AND CONTAINS # OF THE SELECTED SAVED OR PROGRAM AHEAD JOB

↓

THE SELECTED WORK AREA ICON = FULL COLOR, NO SHADOW

↓

THE SELECTED SAVED OR PROGRAM AHEAD JOB VALUES ARE DISPLAYED IN THE SCORECARD

↓

FILEFOLDER AND SCORECARD TABS CHANGE TO REFLECT THE SELECTED SAVED OR PROGRAM AHEAD JOB

↓

THE VALUES IN THE WORK AREA REMAIN THE SAME

↓

USER SELECTS & CHANGES A FEATURE IN THIS JOB ? —NO→ END

**FIG. 40**

YES ↓

SCORECARD FOR "SAVED JOBS" = GHOST, SHADOW WITH NO JOB NUMBER IN IT

↓

END

52

FIG. 41

FIG. 42

EP 0 331 329 B1

**FIG. 43**

EP 0 331 329 B1

PRESS START → IS START SELECTABLE ? — NO → IGNORE

IS START SELECTABLE ? — YES → EXCEPT'NS PROGRAMMED ? — YES → DISPL. EXCEPT'N TAB COLOR UNTIL TIME-OUT → EXCEPT'N TAB RECEDES, DISPL. MAIN SCORECARD AND RUN FRAME → END

EXCEPT'NS PROGRAMMED ? — NO → EXCEPT'N TAB LOSES COLOR → EXCEPT'N TAB RECEDES, DISPL. MAIN SCORECARD AND RUN FRAME

PRESS MAIN TAB → EXCEPT'NS PROGRAMMED ? — YES → EXCEPT'N TAB RECEDES, DISPL. COLOR → PROGRAM CONFLICT ? — YES → A

EXCEPT'NS PROGRAMMED ? — NO → EXCEPT'N TAB RECEDES, LOSES COLOR → END

PROGRAM CONFLICT ? — NO → DISPL. MAIN SCORECARD, COLOR, W/SHADOW; W/PAPER SUPPLY WORK AREA

EXCEPT'N TAB LOSES COLOR → DISPL. MAIN SCORECARD, COLOR, W/SHADOW; W/PAPER SUPPLY WORK AREA

PRESS STANDARD FF TAB WHEN IN EXCEPTION REVIEW FRAME → RETURN TO THE STANDARD MAIN SCORECARD

*FIG. 44*

56

FIG. 45

```
WORKAREA ICON
IS PRESSED
```

SELECTABLE ? — NO → IGNORE

YES

ICON = DELETE ? — NO → ICON = DELETE ALL ? — NO → ICON = PAGE SEL. SCROLL? — NO → ICON = SCROLL REVIEW ? — NO → ICON = GROUP ? → EXCEPTION REVIEW ICON → SEE TEXT DOCUMENTATION

B    C    D    E    F

**FIG. 46**

**B**

REMOVE SHADOW
FROM DELETE
BUTTON

BLANK OUT PAGE
WINDOW

EXCEPT'N
IN REVIEW
WIND. ? — YES → DELETE FROM REVIEW
WINDOW, PACK LIST,
DISPL. NEXT LOWER # IN
PAGE WINDOW, DISPL.
APPROPRIATE SCORECARD

NO

WAS
EXCEPT'N LAST
ONE ? — YES → DISPL. BLANK PAGE
WINDOW, AND MAIN
JOB SCORECARD
(NO SHADOW, GHOSTED)

NO

WAS
EXCEPT'N # A
PART'L GROUP
? — YES → DISPL. SHAD. ON GROUP
BUTTON, NEXT LOWER #
IN PAGE WINDOW, DISPL.
APPROPIATE SCORECARD

NO

DID
EXCEPT'N
HAVE CONFLECT
? — YES → DISPL. SHADOW ON PAGE
SELECT SCROLL, START
AVAIL., REMOVE MESSAGE

NO

DISPL. SHADOW ON
DELETE BUTTON

END

*FIG. 47*

59

**FIG. 48**

**FIG. 49**

*FIG. 50*

E

UP BUTTON
PRESSED
?

NO

YES

REMOVE SHADOW
FROM UP BUTTON

REMOVE SHADOW
FROM DOWN
BUTTON

DISPLAY NEXT
HIGHER GROUP OF 4
EXCEPT'NS IN
REVIEW WINDOW

DISPLAY NEXT
LOWER GROUP OF 4
EXCEPT'NS IN
REVIEW WINDOW

DISPLAY SHADOW
TO DOWN BUTTON

DISPLAY SHADOW
TO UP BUTTON

IS DISPLAYED
GROUP AT UPPER
LIMIT OF LIST
?

YES

IS DISPLAYED
GROUP AT LOWER
LIMIT OF LIST
?

YES

NO

NO

DISPLAY SHADOW
TO UP BUTTON

DISPLAY SHADOW
TO DOWN BUTTON

END

# FIG. 51

EP 0 331 329 B1

FIG. 52

FIG. 53

EP 0 331 329 B1

EP 0 331 329 B1

**FIG. 54**

RESET

SIDE 1

0.1

SHIFT

RETRIEVE PROGRAMS

TOP TRAY
2.1
1.1

OUTPUT

100%

REDUCE/ENLARGE

COPY QUALITY

3

STAPLE

SHIFT
0.1

1

1

SIDES IMAGED

PAPER

270

ODD

11 X 17

272

STANDARD

FAN FOLD

OVER SIZED

262

260

TOOLS

PROGRAM AHEAD

CURRENT JOB

250-2

250-1

250-0

220

66